# EUROPEAN PATENT SPECIFICATION

(11) **EP 1 455 495 B1**
(45) Date of publication and mention of the grant of the patent: **02.08.2006**
(21) Application number: 04005364.7
(22) Date of filing: 05.03.2004
(51) Int. Cl.: H04L 12/58, H04Q 7/22

(54) **Message-data transmitting and receiving unit**
Vorrichtung zur Übertragung und zum Empfang von Nachrichten
Dispositif pour la transmission et la réception de messages

(30) Priority: 06.03.2003 JP 2003059929
(43) Date of publication of application: 08.09.2004
(73) Proprietor: MATSUSHITA ELECTRIC INDUSTRIAL CO., LTD., Kadoma-shi, Osaka 571-8501 (JP)
(72) Inventor: Inukai, Hisamori, Zama-shi Kanagawa (JP); Kawashima, Takashi, Shimogyo-ku Kyoto-shi Kyoto (JP); Yamashita, Ken, Neyagawa-shi Osaka (JP)
(74) Representative: TBK-Patent

(56) References cited:
- US-A1- 2002 019 848
- US-B1- 6 441 916
- US-B1- 6 496 852
- "CONFIRMATION LOG ENTRY FOR STAPLED DOCUMENT" IBM TECHNICAL DISCLOSURE BULLETIN, IBM CORP. NEW YORK, US, vol. 32, no. 11, 1 April 1990 (1990-04-01), pages 328-329, XP000097727 ISSN: 0018-8689

## Description

### Background of the Invention

### Field of the Invention;

The present invention relates to a message-data transmitting and receiving unit which has the function of transmitting and receiving message data which is made up of a text, an image, or the like.

### Description of the related art:

In recent years, as the Internet rapidly became popular, more and more people have been sending and receiving message data (such as electronic mail, also known as e-mail), using personal computer, PDA (or personal digital assistant), or the like.

Meanwhile, some problems have become conspicuous for the widespread use of this technology. Especially, when trying to transmit and receive message data using cellular phone, making communication in bad conditions, might be a possibility the same problem that occurs during making transmission with radio. Under such conditions, you may lose message data while transmitting. There is a technology that is disclosed which allows the transmitter of the source to confirm whether the destination has surely received the transmitted message data.

As a prior art, there has been a method in which a server (or a radio-communication station for mobile phones) that transmits message data has the function of re-transmitting the message data, and thus, it re-transmits the message data when failing to transmit it (e.g., refer to Patent Document 1).

In addition, the art of receiving message data with a mobile phone is described in the following. When message data is received or outputted, that operation is automatically transmitted to the transmitter of the source. Herein, this operation is conducted by presetting whether the confirmation should be executed. The reception-confirmation message data needs to be created in advance when the setting is set as automatic transmission of confirmation. If the setting is not conducted, the message data is transmitted by the user's own operation (e.g., refer to Patent Document 2).

However, according to the technology disclosed in Patent Document 1, additional costs are required to renovate an enormous number of nationwide server facilities. In addition, there have been disadvantages in that if message data is re-transmitted, that may cause communication resources to be inefficiently used, and may also make communication costs higher.

Moreover, in the mobile phone disclosed in Patent Document 2, if reception-confirmation message data is set to be automatically transmitted in response to the message data transmitted from the other side, when you receive the reception-confirmation message data, the reception-confirmation message data may be transmitted in response to the reception-confirmation message data. This causes inefficiently use of communication resources.

Furthermore, in cellular phones, communication resources are limited. If the maximum capacity is exceeded, the message data is divided, and then, is transmitted as multiple messages. Even in the case explained, the reception-confirmation message data may be sent for every piece of divided message data, thereby causing communication resources to be wasted.

Besides, in message-data services for mobile phones, when transmitting and receiving message data, a user has to bear its communication expenses. As described above, if a large volume of reception-confirmation message data is transmitted without notifying the user, the user has to bear communication expenses on the useless reception-confirmation message data.

Herein, Prior Art 1 is Japanese Patent Laid-Open No. 2001-282681 specification, and Prior Art 2 is Japanese Patent Laid-Open No. 2002-101466 specification.

The US-B-6 441 916 discloses E-mail transmitting/receiving means. E-mail data received via a reception section is buffered in a memory. Header information and IFD information of the received E-mail data stored in the memory is analyzed by a header/IFD analysis section. According to the analysis result, the header/IFD analysis section gives notification type data, corresponding to various kinds of notification such as error message and delivery status notification message, to a message ID/text extraction section or reply message creation section. The message ID/text extraction section extracts the message ID and/or mail head text from the received E-mail data according to the notification type data. The reply message creation section creates various messages such as error message and delivery status notification message using the message ID and/or mail head text, etc..

Moreover, in "Confirmation Log Entry for Stapled Document", IBM Disclosure Bulletin, vol. 32, no. 11, April 1990, Armonk, NY, U.S.A., a protocol for supporting confirmation when the distribution is an aggregate consisting of multiple documents that are bound by a staple relationship is described. Confirmation may be requested at either an element or aggregate level.

Furthermore, the US-A-2002/0 019 848 discloses an Internet facsimile apparatus in which a user is notified of details of a message disposition notification situation (MDN) of a transmission image. A mail may be sent with an 'MDN Request ON' so that a confirmation of the sent mail is waited for. When a mail is received it is checked whether a confirmation for a sent mail is waited for and whether the received mail is the MDN. Otherwise, standard processing for the received mail is executed.

### Summary of Invention

In order to resolve the aforementioned disadvantages, it is an object of the present invention to provide a message-data transmitting and receiving unit as claimed in claim 1. Specific embodiments are set forth in the dependent claims.

These and other objects, features and advantages of the present invention will become more apparent upon reading of the following detailed description along with the accompanied drawings.

### Brief Description of the drawings

Fig. 1 is a block diagram, showing an example of the configuration of the message-data transmitting and receiving unit according to a first embodiment of the present invention.
Fig. 2 is a representation, showing data recorded in reception-confirmation message data.
Fig. 3 is a flow chart, showing an operation of the message-data transmitting and receiving unit according to the first embodiment.
Fig. 4A, 4B is a flow chart, showing an operation of the message-data transmitting and receiving unit according to the first embodiment.
Fig. 5 is a representation, showing an example of the transition of pictures which are displayed on a display section by an operation command from a user.
Fig. 6 is a representation, showing an example of various pictures which are displayed on the display section when the user conducts n operation in which a reception-confirmation message is transmitted, in an automatically-creating mode.
Fig. 7 is a representation, showing an example of various pictures which are displayed on the display section when the user conducts an operation in which the reception-confirmation message data is transmitted, if there is the text data which corresponds to an identifier of the transmission destination of the reception-confirmation message data to be created in reception-confirmation message-data creation information, in a manually-creating mode.
Fig. 8 is a representation, showing an example of various pictures which are displayed on the display section when the user conducts an operation in which the reception-confirmation message data is transmitted, if there is not the text data which corresponds to an identifier of the transmission destination of the reception-confirmation message data to be created in reception-confirmation message-data creation information, in the manually-creating mode.
Fig. 9 is a representation, showing an example of various pictures which are displayed on the display section when the user conducts an operation in which the reception-confirmation message data is re-transmitted in response to the message data whose reception-confirmation message data has already been received, in the manually-creating mode.
Fig. 10 is a representation, showing an example of various pictures which are displayed on the display section when the user conducts an operation in which the reception-confirmation message data is transmitted in response to the reception-confirmation message data, in the manually-creating mode.
Fig. 11 is a representation, showing an example of various pictures which are displayed on a display section when the user conducts an operation in which the reception-confirmation message data is transmitted in response to the last piece of divided message data of divided message data, in the manually-creating mode.
Fig. 12 is a representation, showing an example of various pictures which are displayed on the display section when the user conducts an operation in which the reception-confirmation message data is transmitted in response to the first piece of divided message data of the divided message data, in the manually-creating mode.
Fig. 13 is a block diagram, showing the message-data transmitting and receiving unit according to a second embodiment of the present invention.
Fig. 14 is a flow chart, showing processing of the message-data transmitting and receiving unit according to the second embodiment.
Fig. 15 is a block diagram, showing the message-data transmitting and receiving unit according to a third embodiment of the present invention.
Fig. 16A, 16B is a flow chart, showing an operation of the message-data transmitting and receiving unit according to the third embodiment.
Fig. 17 is a flow chart, showing processing in the case where the divided message data which shows that notification message data has not yet been received is received after the notification message data has been transmitted.
Fig. 18 is a block diagram, showing the message-data transmitting and receiving unit according to a fourth embodiment of the present invention.
Fig. 19 is a flow chart, showing an operation at the time when the message-data transmitting and receiving unit displays a receiving list.
Fig. 20 is a representation, showing an example of the receiving list which is displayed on the display section if all the divided message data which makes up undivided message data has been already received.
Fig. 21 is a representation, showing an example of the receiving list which is displayed on the display section if a part of the divided message data which makes up the undivided message data has not been received.
Fig. 22 is a flow chart, showing an operation at the time when the message-data transmitting and receiving unit displays a transmission list.
Fig. 23 is a representation, showing an example of the transmission list created by a transmission-list creating section.

### Detailed Description of Invention

### (First Embodiment)

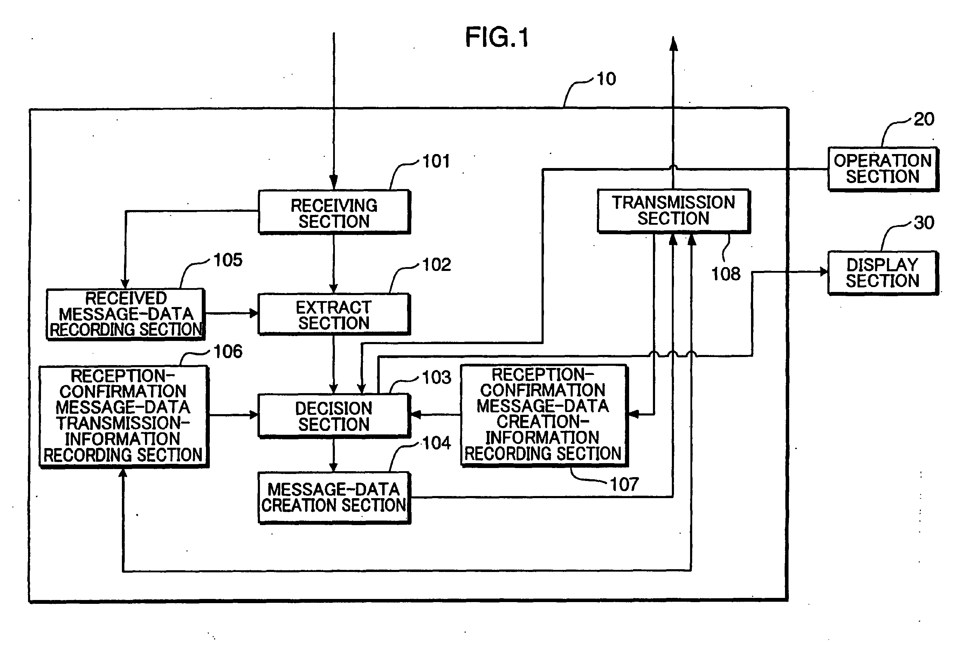

Hereinafter, the embodiments of the present invention will be described with reference to the accompanied drawings. Fig. 1 is a block diagram, showing an example of the configuration of the message-data transmitting and receiving unit according to the first embodiment of the present invention. In Fig. 1, the message-data transmitting and receiving unit includes a main-body section 10, an operation section 20, and a display section 30. The main-body section 10 includes a receiving section 101, an extract section 102, a decision section 103, a message-data creation section 104, a received message-data recording section 105, a reception-confirmation message-data transmission-information recording section 106, a reception-confirmation message-data creation-information recording section 107, and a transmission section 108. According to this embodiment, the message-data transmitting and receiving unit is configured by a personal computer, a cellular phone or the like which has the function of e-mail.

The receiving section 101 receives message data transmitted via a communication line. There is a mode in which reception-confirmation message data is automatically created in response to the received message data (which is hereinafter called the "automatically-creating mode"). If this mode is set, the receiving section 101 notifies the extract section 102 of the received message data. On the other hand, there is another mode in which the reception-confirmation message data is manually created in response to the received message data (which is hereinafter called the "manually-creating mode"). If this mode is set, the receiving section 101 allows the received message-data recording section 105 to record the received message data.

Herein, the reception-confirmation message data is message data to be transmitted for the purpose of notifying the transmitter of the source that the message data has been received. In other words, it is message data whose contents are the fact itself that the message data has been received.

If the manually-creating mode is set, the receiving section 101 records the message data in the received message-data recording section 105. On the other hand, if the automatically-creating mode is set, the extract section 102 records the message data. Herein, the message data includes text data which shows the contents created by the user on the transmission-source side, or created automatically with equipment such as a personal computer, and transmission information which shows various kinds of information on message transmission. The transmission information includes: the title of the message data; a transmission-source identifier which shows the transmission source of the message data; a transmission-destination identifier which shows the transmission destination the message data; an identification number for identifying the message data from the other message data; a division identifier which shows whether the message data is a divided message data; a division state identifier which shows the order of the divided message data; a reception-confirmation identifier which shows whether or not the message data is the reception-confirmation message data; and transmission-time information which shows the transmission date-and-time of the message data. The transmission-source identifier and the transmission-destination identifier are equivalent, for an example, mail address itself could be used as transmission-destination identifier. The title of the reception-confirmation message data is formed, for example, by giving the phrase of reception confirmation, following the title of the received message data. Herein, the title is an example of first information.

The divided message data shows the message data which has been divided into several pieces of data then transmitted. The message data before divided is called "undivided message data." Accordingly, the undivided message data is made up of several pieces of divided message data. If a certain piece of divided message data is identical with the undivided message data, that divided message data is called "related divided message data.".

Among the pieces of divided message data, as the division state identifier of the first piece of divided message data, the data which shows it is the first piece is set. On the other hand, if the division state identifier is the last piece of divided message data, the data which shows it is the last piece is set. In addition, as the division state identifier except the first and last pieces of divided message data, the data which shows their order and the data which shows their continuation are set.

If the automatically-creating mode is set, the extract section 102 extracts the transmission information from the message data whose notice has been given by the receiving section 101. Then, it allows the received message-data recording section 105 to record that message data. It also notifies the decision section 103 of the message data, together with the extracted transmission information. On the other hand, if the manually-creating mode is set, the extract section 102 reads the message data designated by the user from the received message-data recording section 105. After extracting the receiving information, it notifies the decision section 103 of the receiving information, together with that message data.

The reception-confirmation message-data transmission-information recording section 106 records the transmission information of all the reception-confirmation message data transmitted by the transmission section 108.

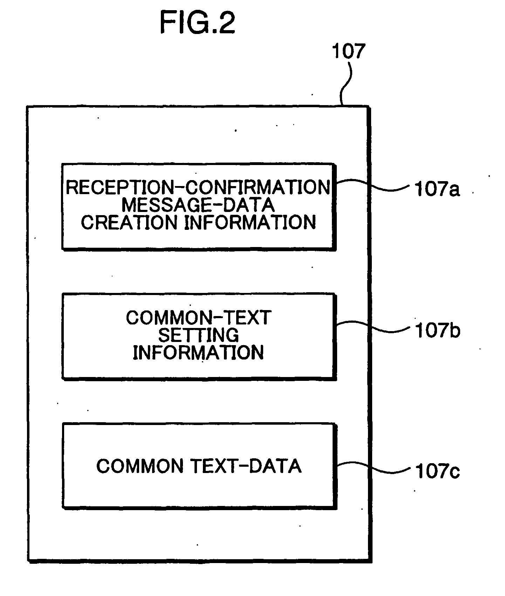

The reception-confirmation message-data creation-information recording section 107, as shown in Fig. 2, records reception-confirmation message-data creation information 107a, common-text setting information 107b, and common text-data 107c. The reception-confirmation message-data creation information 107a is made up of: the transmission-destination identifiers of all the reception-confirmation message data transmitted by the transmission section 108; and the data which is related to the text data of the reception-confirmation message-data which corresponds to each transmission-destination identifier.

The common-text setting information 107b is the data which shows whether or not the reception-confirmation message-data which has the same contents as all the received message data is transmitted. If the reception-confirmation message-data which has the same contents as all the received message data is transmitted, then, for example, the flag of "1" is set, while if the reception-confirmation message-data which has the same contents as all the received message data is not transmitted, then the flag of "0" is set.

The common text-data 107c is made up of the text data used when the reception-confirmation message-data which has the same contents as all the received message data is transmitted.

The decision section 103 shown in Fig. 1 compares the title included in the transmission information extracted by the extract section 102 and the title of the transmission information recorded in the reception-confirmation message-data transmission-information recording section 106.

Thereby, it decides whether or not the reception-confirmation message data is created. In addition, the decision section 103 refers to the data which is set in a division identifier and the division state identifier which are included in the transmission information extracted by the extract section 102. Thereby, it decides whether or not the reception-confirmation message data is created. In addition, the decision section 103 refers to a reception-confirmation identifier which is included in the transmission information extracted by the extract section 102. Thereby, it decides whether or not the reception-confirmation message data is created.

Furthermore, if deciding that the reception-confirmation message data is created, the decision section 103 refers to the reception-confirmation message-data creation information 107a recorded in the reception-confirmation message-data creation-information recording section 107, the common-text setting information 107b, and the common text-data 107c. Thereby, it sets text data of the reception-confirmation message data to be created.

The message-data creation section 104 creates a reception-confirmation message, based on various information whose notice has been given from the decision section 103. The transmission section 108 transmits the reception-confirmation message data or the like created by the message-data creation section 104. In addition, the transmission section 108 records the transmission information of the transmitted reception-confirmation message data in the reception-confirmation message-data transmission-information recording section 106. Besides, the transmission section 108 relates the transmission-destination identifier of the transmitted reception-confirmation message data to the text data. Thus, it allows the reception-confirmation message-data creation-information recording section 107 to record them to update the reception-confirmation message-data creation information 107a.

The operation section 20 includes various operation keys, which is used for the input of operation commands by the user. The display section 30 is formed by a liquid-crystal panel, an organic EL panel, or the like. It displays various pieces of information under the control by the main-body section 10.

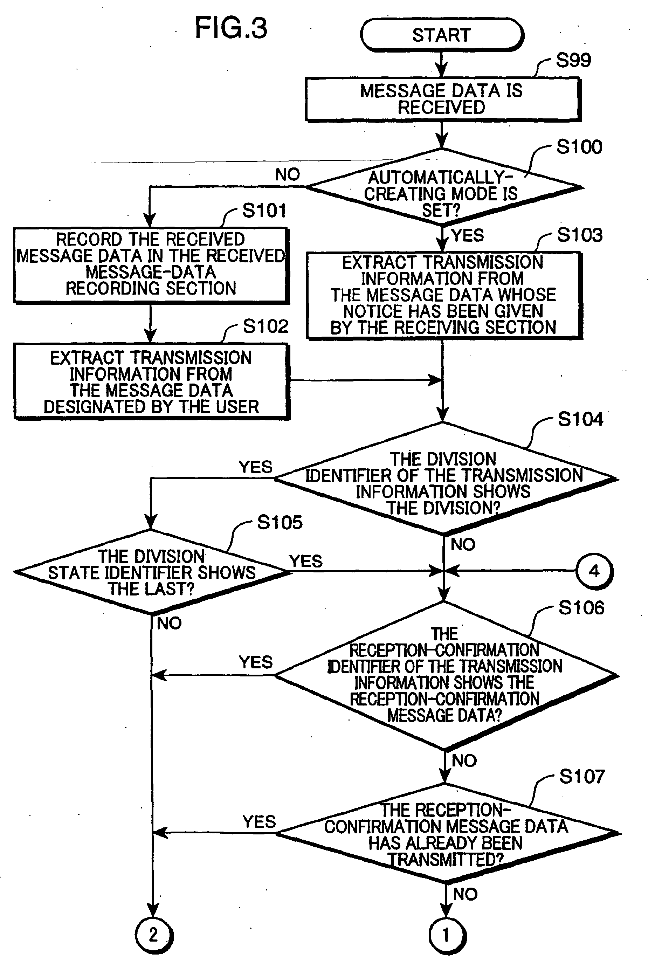

Fig. 3 is a flow chart, showing an operation of the message-data transmitting and receiving unit according to the first embodiment. First, if the receiving section 101 receives message data (in a step S99), it decides whether or not the automatically-creating mode is set (in a step S100). If the automatically-creating mode is set (YES at the step S100), the receiving section 101 notifies the extract section 102 of the received message data, and the extract section 102 extracts transmission information from the message whose notice has been given (in a step S103). On the other hand, if deciding that the manually-creating mode is set (NO at the step S100), the receiving section 101 allows the received message-data recording section 105 to record the received message data (in a step S101).

In a step S102, the extract section 102 extracts transmission information of the message data designated by the user via the operation section 20 from the message data recorded in the received message-data recording section 105.

In a step S104, the decision section 103 decides whether or not the information which shows divided message data is set in the division identifier which is included in the transmission information extracted by the extract section 102. If the information which shows divided message data is set in that identifier (YES at the step S104), then a step S105 follows.

In the step S105, the decision section 103 decides whether or not the data which shows the last is set in the division state identifier which is included in the transmission information extracted by the extract section 102. If the data which shows the last is set (YES at the step S105), then a step S106 follows. On the other hand, if the data which shows the last is not set in the division state identifier (NO at the step S105), then the processing is completed. Therefore, the reception-confirmation message data can be prevented from being transmitted for every piece of divided message data.

In the step S104, if the data which shows the division is set in the division identifier (NO at the step S104), the decision section 103 decides whether or not the reception-confirmation identifier which is included in the transmission information extracted by the extract section 102 shows the reception-confirmation message data (in the step S106).

In the step S106, if the reception-confirmation identifier is shown to be the reception-confirmation message (YES at the step S106), in other words, if the received message data is the reception-confirmation message data from the other side, then the processing is completed because there is no need to create the reception-confirmation message data. Therefore, the reception-confirmation message data can be prevented from being transmitted in response to the reception-confirmation message data.

If the reception-confirmation identifier is not shown to be the reception-confirmation message (NO at the step S106), in a step S107, the decision section 103 decides whether or not the reception-confirmation message data has already been transmitted in response to the received message data. In this case, the decision section 103 makes a decision based on whether or not the transmission information titled "reception confirmation" is recorded in reception-confirmation message-data transmission-information recording section 106, following the title of the transmission information extracted by the extract section 102.

If it is decided that the reception-confirmation message has already been transmitted (YES at the step S107), then the processing is completed. On the other hand, if it is decided that the reception-confirmation message has not yet been transmitted (NO at the step S107), then a step S108 follows.

In the step S108, the decision section 103 decides whether or not the flag of the common-text setting information is "1". If the flag shows "1" (YES at the step S108), the common text-data 107c is read from the reception-confirmation message-data creation-information recording section 107, and the message-data creation section 104 is notified of the common text-data 107c, together with the transmission information extracted by the extract section 102 (in a step S112).

On the other hand, if the flag of the common-text setting information shows "0" (NO at the step S108), the decision section 103 decides whether or not there is the transmission-destination identifier which is identical with the transmission-source identifier that is included in the transmission information extracted by the extract section 102 in the reception-confirmation message-data creation information 107a (in a step S109). If there is the transmission-destination identifier in the reception-confirmation message-data creation information 107a (YES at the step S109), the decision section 103 reads the text data which corresponds to the transmission-destination identifier from the reception-confirmation message-data creation information 107a, and the message-data creation section 104 is notified of the text data, together with the transmission information extracted by the extract section 102 (in a step S110).

On the other hand, in the step S109, if the decision section 103 decides that there is not the transmission-destination identifier which is identical with the transmission-source identifier extracted by the extract section 102 in the reception-confirmation message-data creation information 107a (NO at the step S109), then a step S111 follows.

In the step S111, if an operation command to use the common text-data 107c is given (YES at the step S111), the decision section 103 moves the processing forward to the step S112. On the other hand, if an operation command to use the common text-data 107c is not given (NO at the step S111), the decision section 103 allows the display section 30 to display an input picture of the text data which corresponds to the reception-confirmation message, and accepts the input of the text data from the user (in a step S113). In this case, the user views the input picture of the text data, and operates the operation section 20 to input the text data the user desires.

In a step S114, the message-data creation section 104 creates the reception-confirmation message data, from the common text-data 107c and the transmission information whose notice has been given from the decision section 103. Then, it notifies the transmission section 108 of it. In this case, the text data of all the reception-confirmation message data which is created by the message-data creation section 104 is the contents of the common text-data 107c.

In a step S115, the message-data creation section 104 creates the reception-confirmation message data, from the text data and the transmission information whose notice has been given from the decision section 103. Then, it notifies transmission section 108 of it. In this case, the text data of the reception-confirmation message data which is created by the message-data creation section 104 is identical with the text data of the reception-confirmation message data which was created in the past in response to the same transmission-destination identifier.

In a step S116, the message-data creation section 104 creates the reception-confirmation message data, from the text data and the transmission information whose notice has been given from the decision section 103. Then, it notifies transmission section 108 of it. In this case, the text data of the reception-confirmation message data which is created by the message-data creation section 104 is the text data inputted by the user.

In the processing of the steps S114 to S116, the message-data creation section 104 sets the transmission-source identifier that is included in the transmission information whose notice has been given from the decision section 103 as the transmission-destination identifier of the reception-confirmation message data to be created. It also sets the data which shows that the message data is the reception-confirmation message data to the reception-confirmation identifier of the reception-confirmation message data to be created. Therefore, the reception-confirmation message data can be prevented from being transmitted from the other side in response to this reception-confirmation message data. In addition, what is marked the "reception confirmation", following the received message data, is set to be the title of the reception-confirmation message.

In a step S117, the transmission section 108 transmits the reception-confirmation message data created by the message-data creation section 104. Then, after the transmission operation has ended, the transmission section 108 records the transmission information of the reception-confirmation message data created by the message-data creation section 104 in the reception-confirmation message-data transmission-information recording section 106 (in a step S118). Then the processing is completed.

In the above described flow chart, the decision section 103, first, decides whether or not the message data is divided message data (in the step S104). Next, it decides whether or not it is the reception-confirmation message data (in the step S106). Then, it decides whether or not the reception-confirmation message data has already been transmitted (in the step S107). However, this is only an example, and thus, the order of these decisions may also be suitably changed.

Furthermore, divided message data is received, in the timing when all the other divided message data related to the divided message data has been received, the reception-confirmation message data may also be transmitted. Or in the timing when the first divided message has been received, the reception-confirmation message data may also be transmitted. Moreover, when a specific number of pieces of divided message data related to the divided message data have been received, the reception-confirmation message data may also be transmitted.

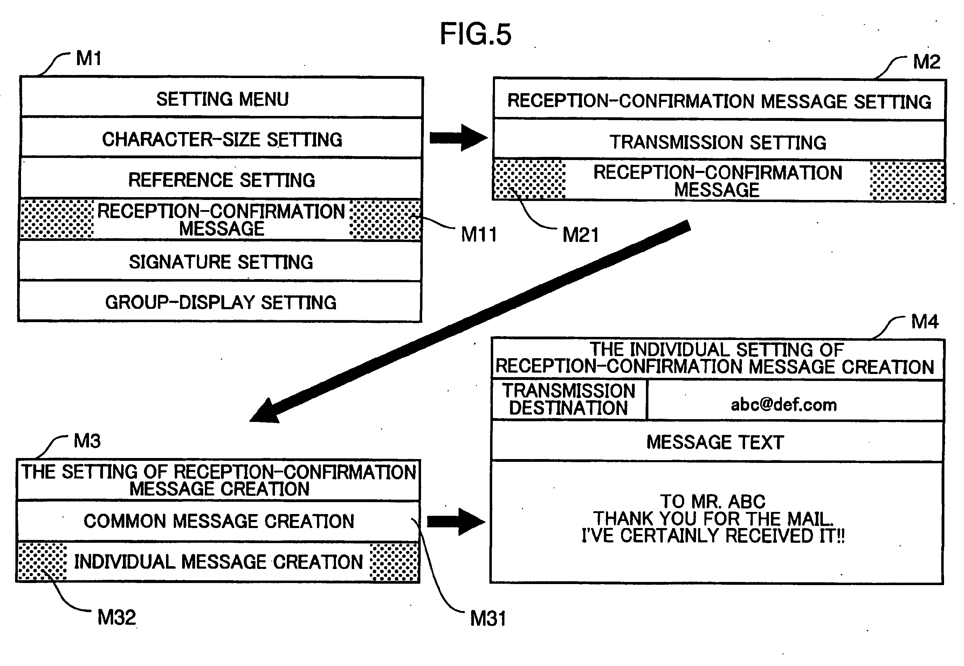

Fig. 5 is a representation, showing an example of various pictures which are displayed on a display section 30 by an operation command from a user. Herein, these pictures are created by the decision section 103, and are displayed on the display section 30.

A "setting menu" picture M1 is a picture in which each kind of setting item which is related to message data is displayed. It is made up of each item of "the setting of character sizes", "the setting of references", "the reception-confirmation message", "the setting of signatures", and "the setting of group displays." If the item of "the reception-confirmation message" M11 is selected by the user, "the setting of the reception-confirmation message" picture M2 is displayed on the display section 30.

"The setting of the reception-confirmation message" picture M2 is made up of the items of "the setting of transmission", and "the creation of the reception-confirmation message." If the user selects the item of the "reception-confirmation message creation" M21, then "the setting of reception-confirmation message creation" picture M3 is displayed on the display section 30.

"The setting of reception-confirmation message creation" picture M3 is made up of the items of "common message creation", and "individual message creation." If the item of "individual message creation" M31 is selected, then "the individual setting of reception-confirmation message creation" picture M4 is displayed on the display section 30.

"The individual setting of reception-confirmation message creation" picture M4 is made up of the column of "transmission destinations", and the column of "message texts." In the column of "the transmission destinations", "abc@def.com" is displayed as the mail address of the transmission destination of the reception-confirmation message data. Herein, the decision section 103 reads the transmission-source identifier included in the transmission information, and the above described mail address is set as the transmission-destination identifier of the reception-confirmation message data.

"The document displayed in the column of "message texts" is a message which is inputted by the user via the operation section 20. The user operates the operation section 20, and inputs via the text data of the reception-confirmation message data on this individual setting of reception-confirmation message creation" picture M4. Then, if the user gives a decision command, the decision section 103 accepts the inputted text data, and notifies the message-data creation section 104.

If the transmission section 108 transmits the reception-confirmation message data, it relates the text data displayed in the column of "message texts" to the transmission-destination identifier which is the mail address described in the column of "transmission destinations. " Then, it allows the reception-confirmation message-data creation-information recording section 107 to record them to update the reception-confirmation message-data creation information 107a.

Herein, an example of the message data which corresponds to individual transmission-destination identifiers is shown in Fig. 5. However, if the item of individual message cremation" M31 is selected in "the setting of reception-confirmation message creation" picture M3, then a similar picture to "the individual setting of reception-confirmation message creation" picture M4 is displayed on the display section 30. Then, the user is allowed to input the common text-data 107c. The inputted common text-data 107c is recorded in the reception-confirmation message-data creation-information recording section 107.

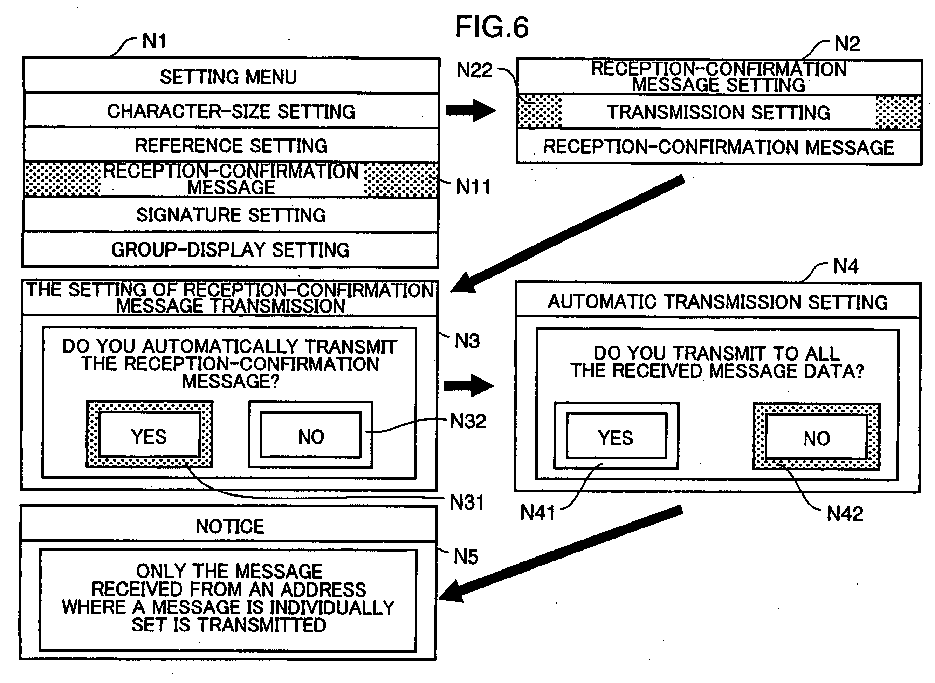

Fig. 6 is a representation, showing an example of various pictures which are displayed on the display section 30 when the user conducts an operation in which a reception-confirmation message is transmitted, in the automatically-creating mode. A "setting menu" picture N1 and "the setting of the reception-confirmation message" picture N2 are the same as M1 and M2 shown in Fig. 5. Herein, these pictures are created by the decision section 103 and are displayed on the display section 30.

If the item of "the setting of transmission" N22 is selected on the setting of the reception confirmation message" picture N2, then a picture N3 of "the setting of the reception-confirmation message transmission" is displayed on the display section 30. Herein, the picture N3 is a picture for selecting whether or not the reception-confirmation message should be automatically transmitted. If a YES button N31 is selected on the picture N3 of "the setting of the reception-confirmation message transmission", then a picture N4 of "the setting of automatic transmission" is displayed on the display section 30 to set the automatically-creating mode. Herein, the picture N4 is a picture for selecting whether or not the reception-confirmation message data should be automatically transmitted in response to all the received message data. On the other hand, if a NO button N32 is selected on the picture N3 of "the setting of the reception-confirmation message transmission", then the manually-creating mode is set.

If a NO button N42 is selected on the picture N4 of "the setting of automatic transmission", then a picture N5 of "notice" is displayed on the display section 30, thereby setting the automatically-creating mode. In this case, the flag of "0" is set to the common-text setting information 107b.

On the other hand, if a YES button N41 is selected on the picture N4 of the setting of automatic transmission", then the flag of "1" is set to the common-text setting information 107b. In this case, the reception-confirmation message data whose text data is the common text-data 107c is created in response to all the received message data.

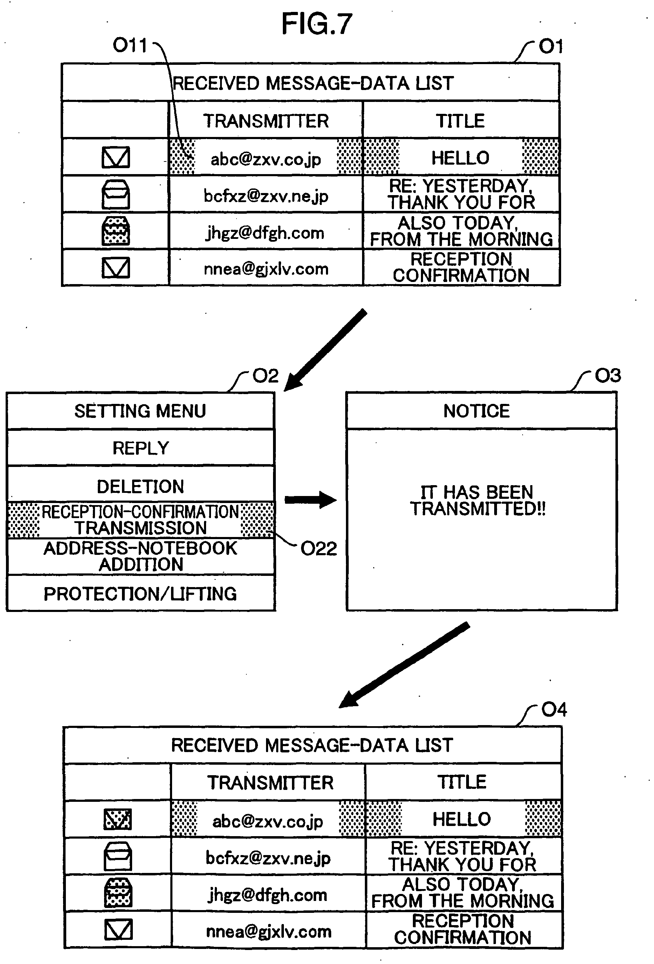

Fig. 7 is a representation, showing an example of various pictures which are displayed on the display section 30 when the user conducts an operation in which the reception-confirmation message data is transmitted, if there is the text data which corresponds to the identifier of the transmission destination of the reception-confirmation message data to be created in reception-confirmation message-data creation information, in the manually-creating mode. Herein, these pictures are created by the decision section 103, and are displayed on the display section 30.

A picture O1 of "the received message-data list" is made up of the column of "transmitters" which shows the transmission source of the message data received by the receiving section 101, the column of "titles", and the column of icon display which shows the state of the received message data. On the picture O1, a piece of message data is displayed on each line. If the user selects columns on the picture O1 of "the received message-data list", then their backgrounds are colored and displayed. In the figure, the colored column of "transmitters" and the column of "titles" mean that the message data on the first line is selected. In addition, the message data on the first line is displayed with an icon whose envelope is sealed and whose inside is white. This means that the reception-confirmation message has not yet been received and the message data has already been read. The message data on the second line is displayed with an icon whose envelope is opened and whose inside is white. This means that the message data has already been read and the reception-confirmation message data has not yet been transmitted.

The message data on the third line is displayed with an icon whose envelope is opened and whose inside is colored. This means that the reception-confirmation message data has already been transmitted and the text data has also been read.

Then, if the user gives a selection execution command, then a "menu" list O2 is displayed. The "menu" list O2 is made up of the items of "reply", "deletion", "reception-confirmation transmission", "address-notebook addition", and "protection/lifting." If the user selects items on the "menu" list O2, then their backgrounds are colored and displayed. In this case, a column O22 of "reception-confirmation transmission" is selected. Then, if the user gives a selection execution command, then a "notice" dialogue O3 is displayed which reads "It has been transmitted!!." Therefore, the reception-confirmation message data is transmitted in response to the message data displayed on a picture O11 of "the received message-data list".

Then, a picture O4 of "the received message-data list" is displayed. In this case, in the column of icon display of the message data on the first line, a colored icon is displayed which shows that the reception-confirmation message data has already been transmitted. This enables the user to recognize with a single glance that the message data on the first line is not yet read and the reception-confirmation message has already been transmitted.

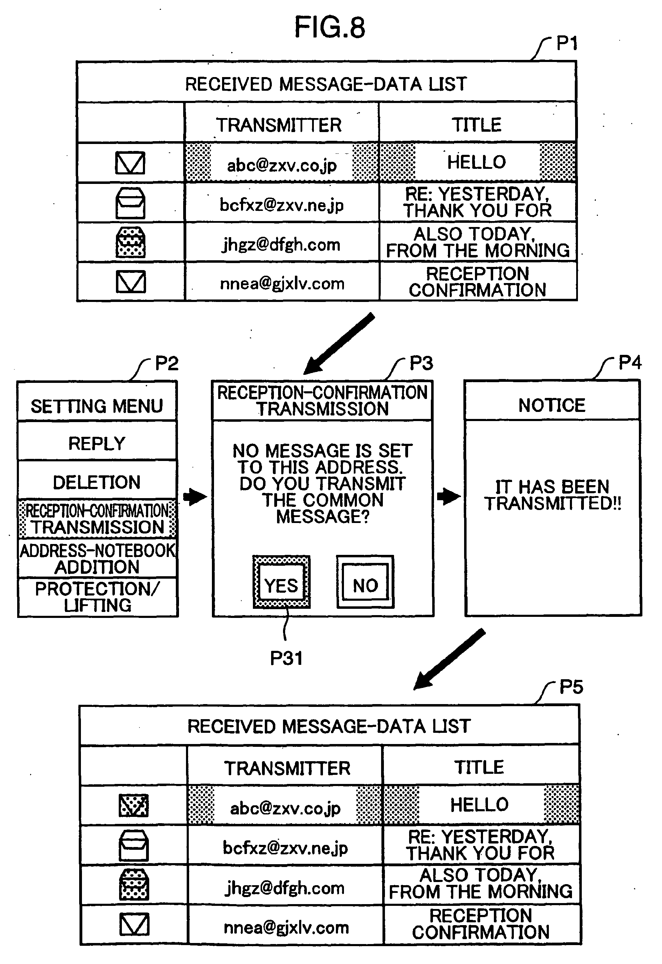

Fig. 8 is a representation, showing an example of various pictures which are displayed on the display section 30 when the user conducts an operation in which the reception-confirmation message data is transmitted, if there is not the text data which corresponds to the identifier of the transmission destination of the reception-confirmation message data to be created in reception-confirmation message-data creation information, in the manually-creating mode. Herein, these pictures are created by the decision section 103, and are displayed on the display section 30.

A picture P1 of "the received message-data list", a "menu" list P2, a "notice" dialogue P4, and a picture P5 of "the received message-data list", which are shown in Fig. 8, are each the same as the reference characters O1, O2, O3 and O4 shown in Fig. 7.

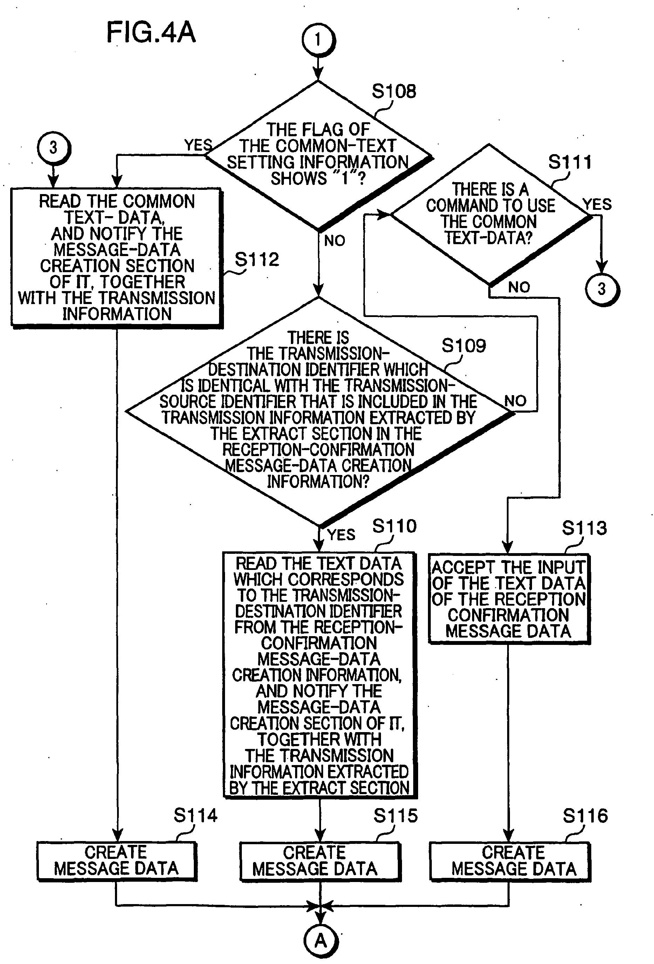

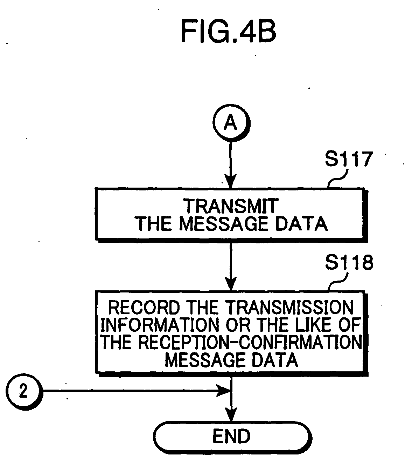

In Fig. 8, a "reception-confirmation transmission" dialogue P3 is displayed between the "menu" list P2 and the "notice" dialogue P4, different from Fig. 7. This is displayed if the decision of NO is made at the step S109 shown in Fig. 4. Then, if the user selects a "YES" button P31 in the "reception-confirmation transmission" dialogue P3, then the "notice" dialogue P4 is displayed. Therefore, the reception-confirmation message data whose text data is the common text-data 107c is transmitted.

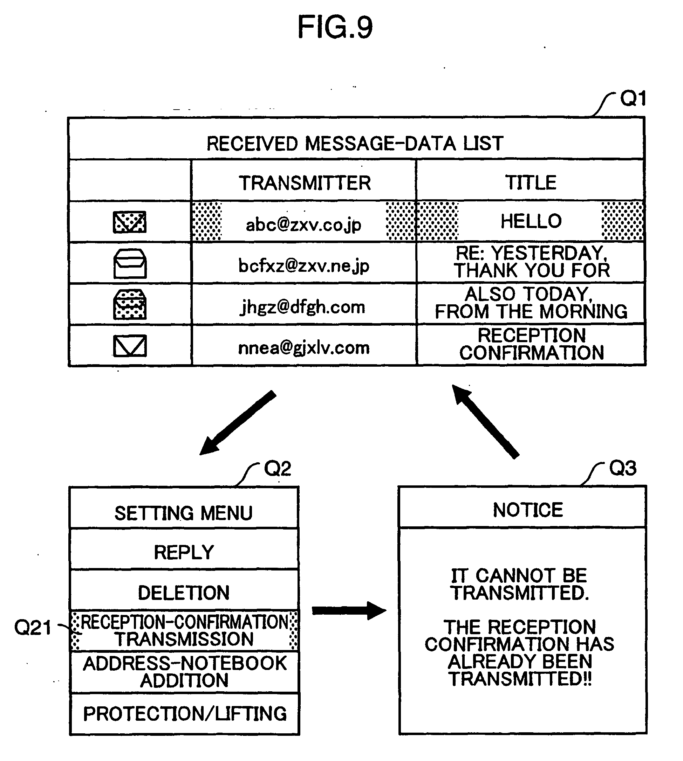

Fig. 9 is a representation, showing an example of various pictures which are displayed on the display section 30 when the user conducts an operation in which the reception-confirmation message data is re-transmitted in response to the message data whose reception-confirmation message data has already been received, in the manually-creating mode. Herein, these pictures are created by the decision section 103, and are displayed on the display section 30. In the item of icon display on the first line of a picture Q1 of "the received message-data list" , a colored icon is displayed which shows that the reception-confirmation message data has already been transmitted. Then, if the user gives a selection execution command, then a "menu" list Q2 is displayed. Next, if the user selects an item Q21 of "reception-confirmation transmission" from the "menu" list Q2, then a "notice" dialogue Q3 is displayed which reads "It cannot be transmitted. The reception confirmation has already been transmitted!!." This decision is made by the decision section 103, based on whether or not the transmission information identical with the transmission information of this message data is stored in the reception-confirmation message-data transmission-information recording section 106. Therefore, the reception-confirmation message data can be prevented from being re-transmitted from the other side in response to the message data whose reception-confirmation message data has already been transmitted.

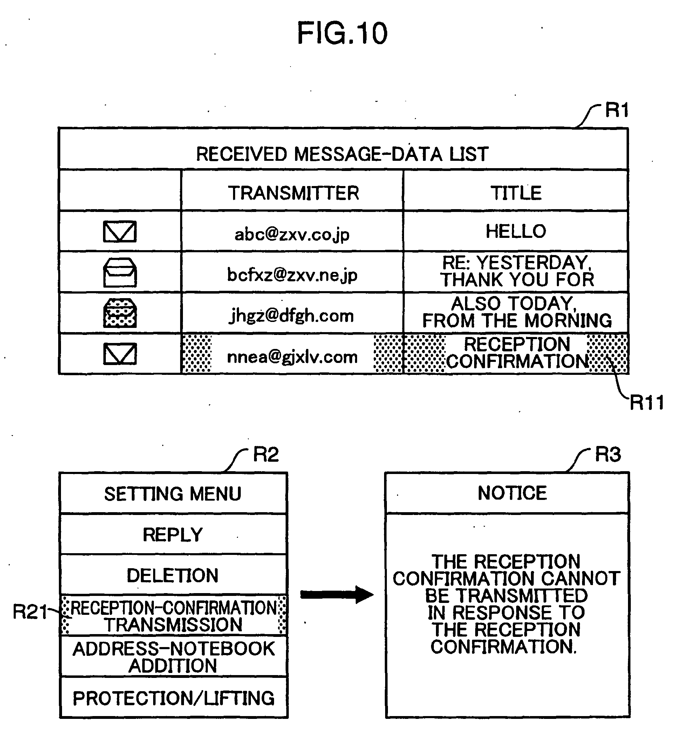

Fig. 10 is a representation, showing an example of various pictures which are displayed on the display section 30 when the user conducts an operation in which the reception-confirmation message data is transmitted in response to the reception-confirmation message data, in the manually-creating mode. Herein, these pictures are created by the decision section 103, and are displayed on the display section 30. In the column of a "title" item on the fourth line of a picture R1 of "the received message-data list", "reception confirmation" R11 is displayed, which shows this message data is the reception-confirmation message data. Then, if the user selects the message data on the fourth line, a "menu" list R2 is displayed. Next, an item R21 of "reception-confirmation transmission" is selected, then a "notice" dialogue R3 is displayed which reads The reception confirmation cannot be transmitted in response to the reception confirmation. In order to make this decision, the decision section 103 refers to the reception-confirmation identifier of the transmission information of the message data. Therefore, the reception-confirmation message data can be prevented from being transmitted, in response to the reception-confirmation message data.

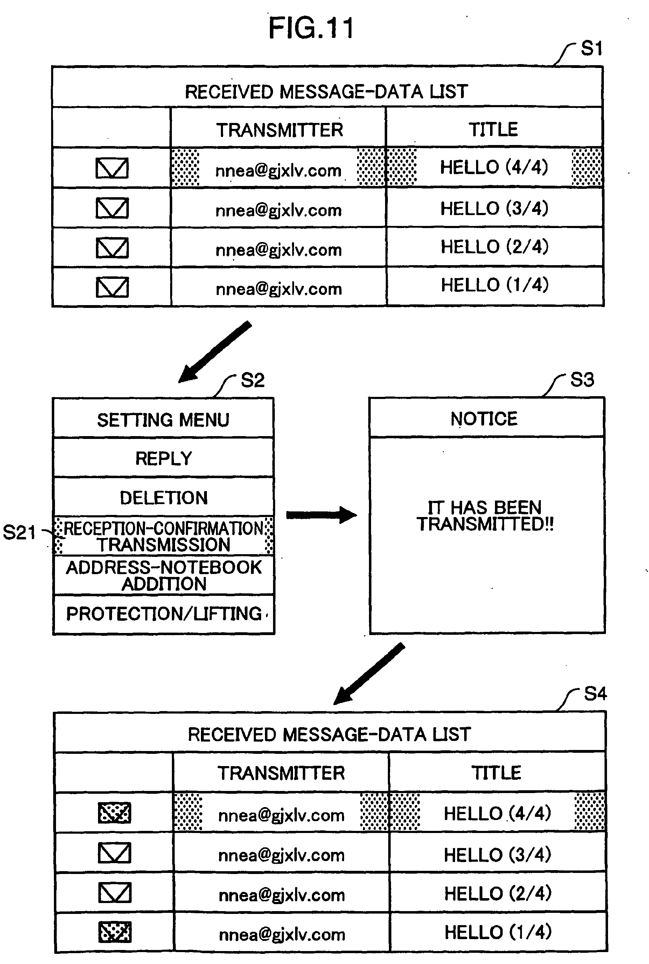

Fig. 11 is a representation, showing an example of various pictures which are displayed on a display section 30 when the user conducts an operation in which the reception-confirmation message data is transmitted in response to the last piece of divided message data of divided message data, in the manually-creating mode. Herein, these pictures are created by the decision section 103, and are displayed on the display section 30.

In a picture S1 of "the received message-data list", four pieces of divided message data which are formed by dividing the message data into four are displayed. The divided message data on the first line is the last divided message data of the undivided message data, and is displayed as "4/4" behind the title. Then, if the divided message data on the first line is selected, a "menu" list S2 is displayed. Next, an item S21 of "reception-confirmation transmission" is selected, then a "notice" dialogue S3 is displayed which reads "It has been transmitted!!" In this case, the decision section 103 refers to the division state identifier of the divided message data on the first line, and thereby, decides whether or not this divided message data is the last divided message data. After the "notice" dialogue S3 has been displayed, a picture S4 of "the received message-data list" is displayed again. In this case, in all the icon display columns of the four pieces of divided message data, colored icons are displayed which shows that the reception-confirmation message data has already been transmitted. This enables the user to recognize with a single glance that the reception-confirmation message data has already been transmitted in response to the divided message data.

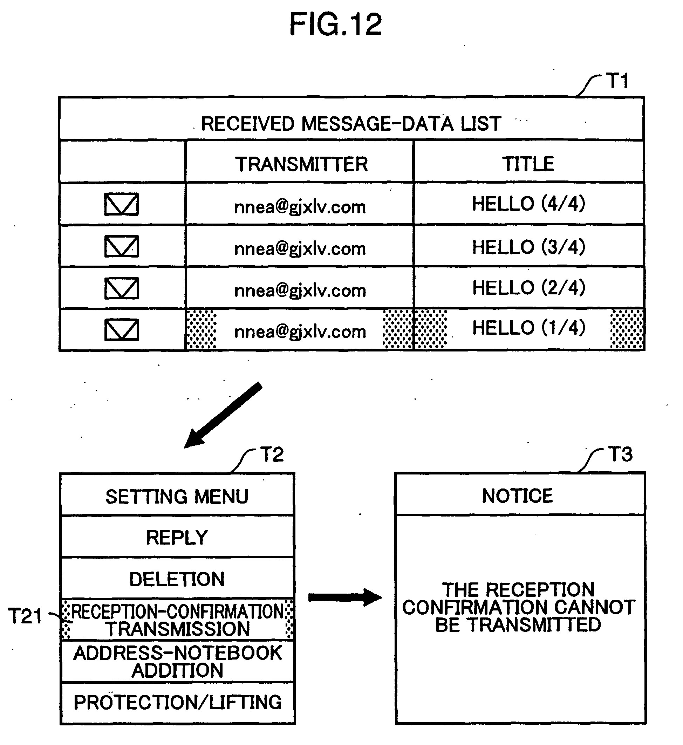

Fig. 12 is a representation, showing an example of various pictures which are displayed on the display section 30 when the user conducts an operation in which the reception-confirmation message data is transmitted in response to the first piece of divided message data of the divided message data, in the manually-creating mode. Herein, these pictures are created by the decision section 103, and are displayed on the display section 30.

In a picture T1 of "the received message-data list", in the same way as in the picture S1 of "the received message-data list" shown in Fig. 11, four pieces of divided message data which are formed by dividing the message data into four are displayed. The divided message data on the fourth line is the first divided message data of undivided message data, and is displayed as "1/4" behind the title. Then, if the divided message data on the fourth line is selected by the user, a "menu" list T2 is displayed. Next, an item T21 of "reception-confirmation transmission" is selected, then a "notice" dialogue T3 is displayed which reads "The reception confirmation cannot be transmitted. " In this case, the decision section 103 decides that the division state identifier of the divided message data does not show the last, then the "notice" dialogue T3 is displayed.

As described above, in the message-data transmitting and receiving unit according to the first embodiment, the reception-confirmation message data is not transmitted in response to each piece of divided message data, the reception-confirmation message data is not re-transmitted in response to the message data whose reception-confirmation message data has once been transmitted, and the reception-confirmation message data is not transmitted in response to the reception-confirmation message data when the reception-confirmation message data is received. This prevents unnecessary message data from being transmitted, thus allowing communication resources to be more efficiently used. In addition, the text data created in the past is used with respect to the message data from the transmission destination whose reception-confirmation message data was created in the past. This saves the trouble to create text data for every piece of message data. Moreover, if the reception-confirmation message data is set to have the text data in common, the common text-data 107c is used as the text data, and the reception-confirmation message data is automatically created. This saves the trouble to create text data for every piece of message data.

### (Second Embodiment)

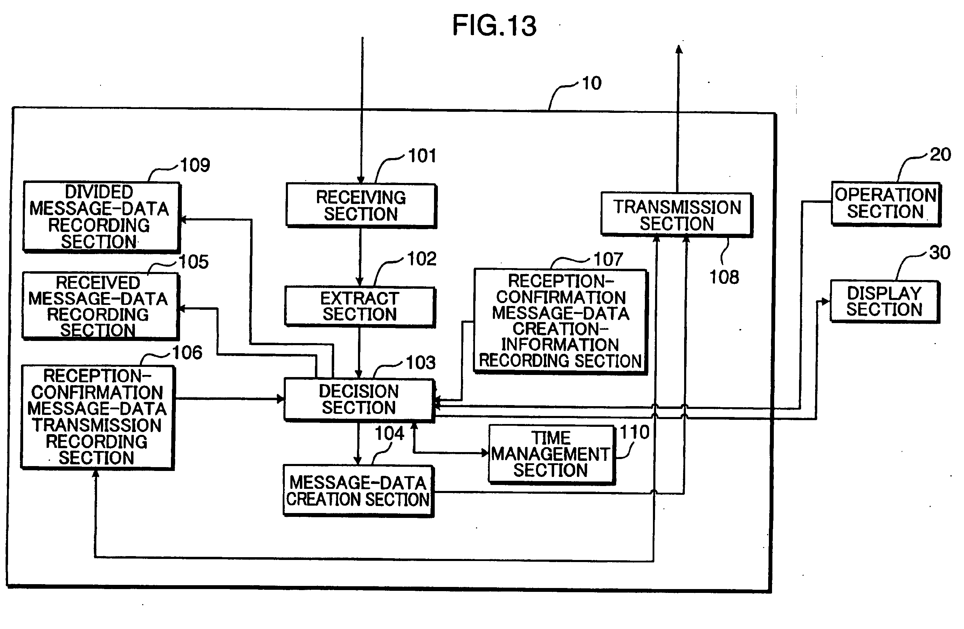

Next, the message-data transmitting and receiving unit according to a second embodiment of the present invention will be described. Fig. 13 is a block diagram, showing the message-data transmitting and receiving unit according to a second embodiment of the present invention. Herein, the same reference numerals and characters are given as long as they have the same as the first embodiment, and thus, their description is omitted. The message-data transmitting and receiving unit according to the second embodiment further includes a divided message-data recording section 109 and a time management section 110, in addition to the sections of the message-data transmitting and receiving unit according to the first embodiment.

According to the second embodiment, the receiving section 101 notifies the extract section 102 of the received message data, regardless of the creating mode, automatically or manually. The extract section 102 extracts transmission information from the message data whose notice has been given by the receiving section 101. Then, it notifies the decision section 103 of it, together with the message data. If the division identifier which is included in the transmission information extracted by the extract section 102 is shown to be the divided message data, the decision section 103 allows the divided message-data recording section 109 to record the dividedmessage data which includes the transmission information. On the other hand, if the division identifier is not shown to be the divided message data, in other words, if it is shown to be the message data except the divided message data, the decision section 103 allows the received message-data recording section 105 to record it.

The time management section 110 is configured by, for example, a timer. Under the control of the decision section 103, it starts the timer when any one piece of the divided message data which makes up the undivided message data is received. Then, it stops the timer after a predetermined time passes.

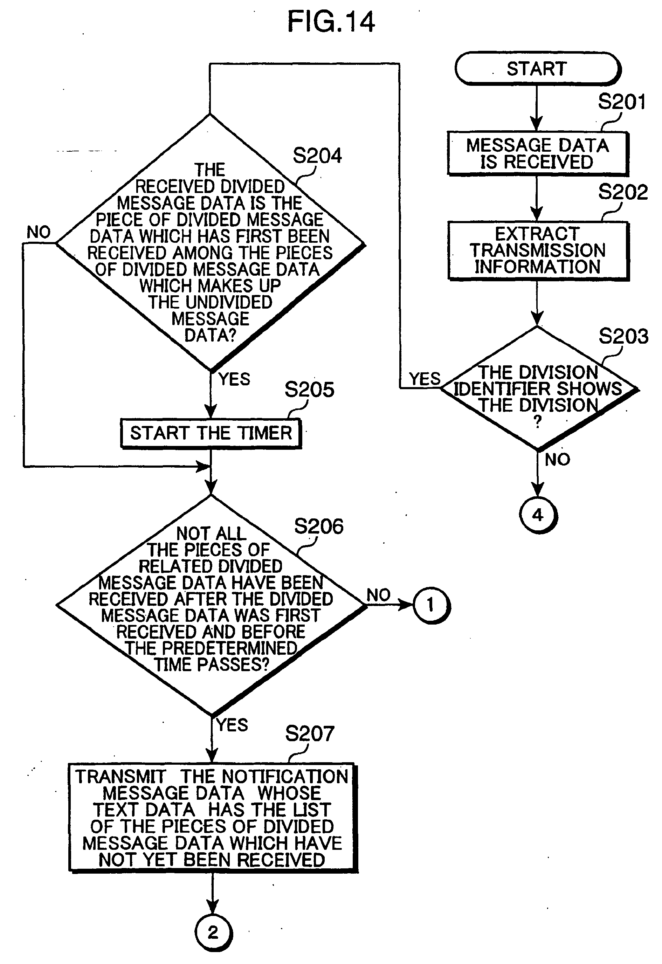

Next, the processing of the message-data transmitting and receiving unit according to the second embodiment of the present invention will be described, using a flow chart shown in Fig. 14. In a step S201, the receiving section 101 notifies the extract section 102 of the received message data. The extract section 102 extracts transmission information from the message data whose notice has been given (in a step S202). Then, it notifies the decision section 103 of the extracted transmission information, together with the message data.

In a step S203, if the decision section 103 decides that the division identifier of the transmission information whose notice has been given from the extract section 102 shows the divided message data (YES at the step S203), then a step S204 follows.

On the other hand, in the step S203, if the decision section 103 decides that the division identifier of the transmission information whose notice has been given from the extract section 102 does not show the divided message data (NO at the step S203), then it moves the processing forward to the step S106 shown in Fig. 3. After this, the processing of the message-data transmitting and receiving unit according to the second embodiment is the same as the processing of the message-data transmitting and receiving unit according to the first embodiment, and thus, its description is omitted.

In the step S204, if the decision section 103 decides that the received divided message data is the divided message data which has first been received of the divided message data which makes up the undivided message data (YES at the step S204), then it allows the time management section 110 to starts the timer (in a step S205).

In this case, the decision section 103 decides whether or not it is the divided message data which has first been received by comparing the transmission information of the received divided message data and the transmission information of the divided message data which is recorded in the divided message-data recording section 109. Specifically, it is decided whether or not the divided message data which has the same title and transmission-time information as those that is included in the transmission information of the divided message data is recorded in the divided message-data recording section 109. If it is not recorded, it is decided that the received divided message data is the divided message data which has first been received of the divided message data which makes up the undivided message data.

On the other hand, in the step S204, if the decision section 103 decides that the received divided message data is not the divided message data which has first been received of the divided message data which makes up the undivided message data (NO at the step S204), in other words, if the divided message data which is related to the received divided message data has already been transmitted, then not a step S205 but a step S206 follows.

In this case, the divided message data which has the same title and transmission-time information as those that is included in the transmission information of the divided message data is not recorded in the divided message-data recording section 109, then the decision section 103 decides that the received divided message data is not the divided message data which has first been received of the divided message data which makes up the undivided message data. Herein, in the step S204, the decision section 103 may also start the timer of the time management section 110 when the first divided message data of the divided message data which makes up the undivided message data has been received.

In the step S206, if not all the divided message data which makes up the undivided message data could be received before the time management section 110 finishes counting the predetermined time (YES at the step S206), then the decision section 103 specifies which divided message data of the divided message data which makes up the undivided message data has not yet been received. Then, it notifies the message-data creation section 104 of the specified information.

In this case, the decision section 103 specifies, from among the pieces of divided message data which are recorded in the divided message-data recording section 109, the pieces of divided message data which is related to the received divided message data. Then, it refers to the division state identifiers of these pieces of divided message data, and thereby, specifies which pieces of divided message data have not yet been received.

In a step S207, the message-data creation section 104 creates notification message data whose text data is the information specified by the decision section 103, and transmits it to the transmission section 108.

On the other hand, in the step S206, if all the related divided message data could be received after the first divided message data is received and before the predetermined time passes (NO at the step S206), then the step S108 shown in Fig. 4 follows. After this, the processing of the message-data transmitting and receiving unit according to the second embodiment is the same as the processing of the flow chart shown in Fig. 4, and thus, its description is omitted.

As described above, in the message-data transmitting and receiving unit according to the second embodiment, if the divided message data which makes up the undivided message data could not be received, then notification message data is created which shows which divided message data could not be received. Then, it is transmitted to the transmission source of the divided message data. This enables the transmission source to transmit only the divided message data which has not been received.

### (Third Embodiment)

In the message-data transmitting and receiving unit according to a third embodiment of the present invention, in addition to the functions of the message-data transmitting and receiving unit according to the second embodiment, a new function is provided of inquiring of a mail server 40 on the receiving side if not all the divided message data which makes up the undivided message data could be received. Herein, the same reference numerals and characters are given as long as they have the same as the second embodiment, and thus, their description is omitted.

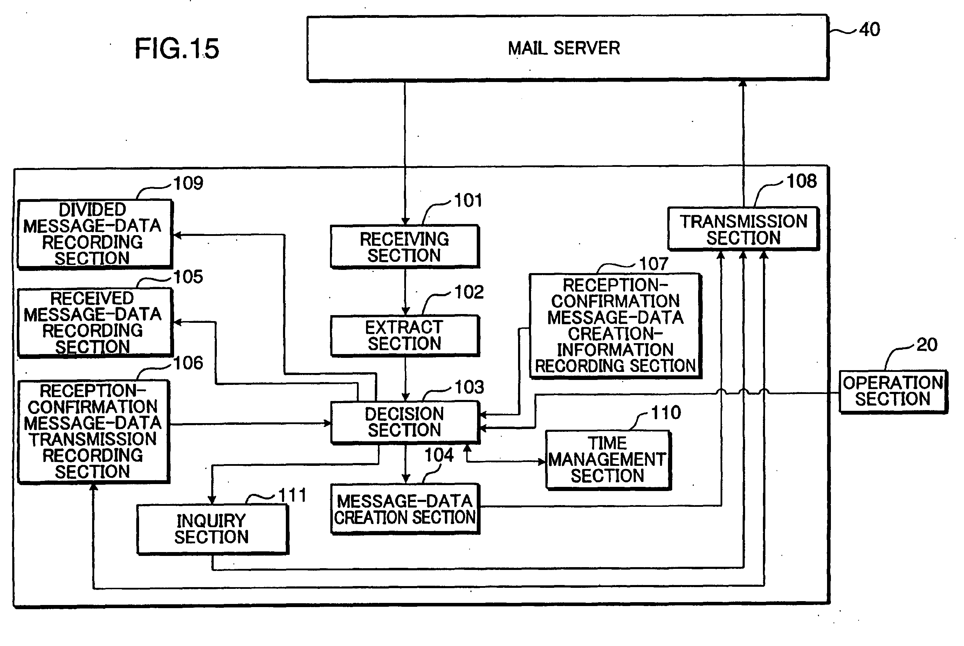

Fig. 15 is a block diagram, showing the message-data transmitting and receiving unit according to the third embodiment. In the message-data transmitting and receiving unit according to the third embodiment, an inquiry section 111 is newly provided, in addition to the sections of the message-data transmitting and receiving unit according to the second embodiment. If the decision section 103 decides that not all the divided message data which makes up the undivided message data has been received, then the inquiry section 111 inquires of the mail server 40 on the side which has received the divided message data whether or not there is the divided message data which has not yet been received. Specifically, the inquiry section 111 creates an inquiry mail whose text data is the title and transmission date-and-time information of the divided message data which has already been received. Then, it transmits it to the mail server 40 via the transmission section 108.

The mail server 40 which has received the inquiry mail checks whether or not the message data is recorded which is identical with the title and transmission date-and-time information that are shown in the text data of the inquiry mail. If there is the identical message data, then it is decided that there is the divided message data which has not yet been received. Then, the divided message data which has not yet been received is transmitted to the message-data transmitting and receiving unit.

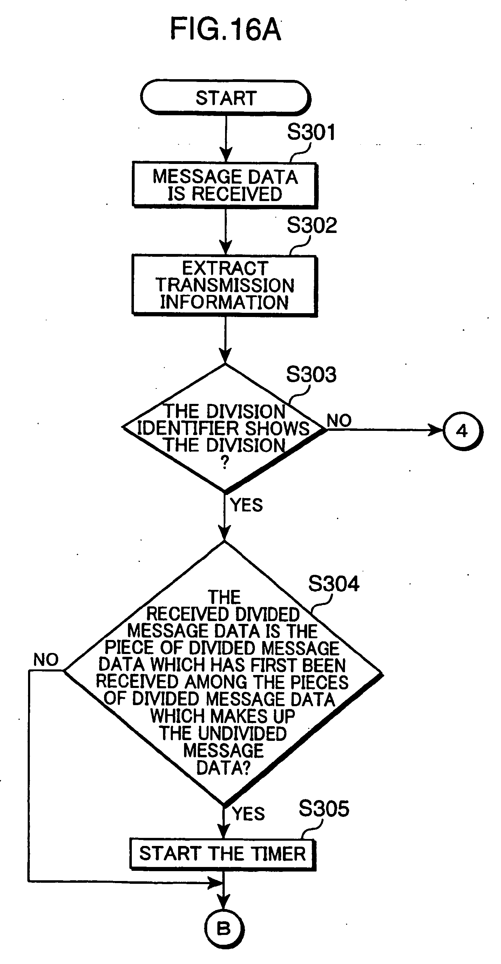

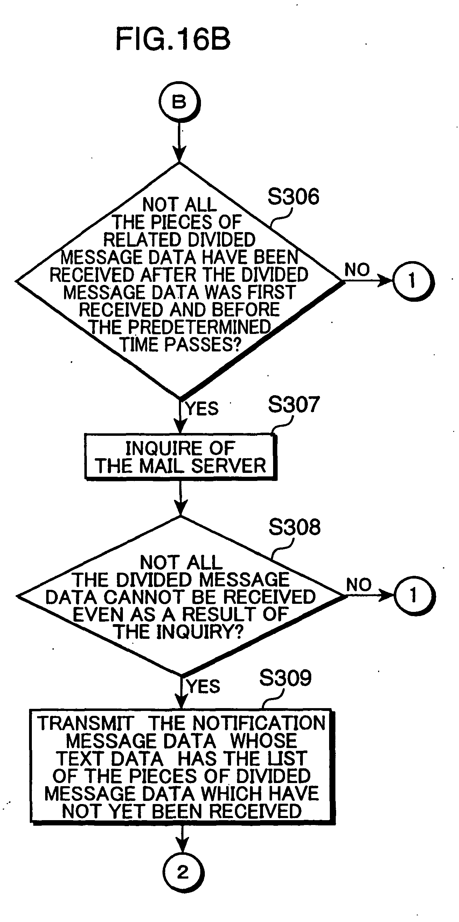

Fig. 16 is a flow chart, showing an operation of the message-data transmitting and receiving unit according to the third embodiment. The processing of the step S301 to the step S305 is the same as the processing of the step S201 to the step S205 shown in Fig. 14, and thus, its description is omitted.

In a step S306, if not all the divided message data which makes up the undivided message data could be received before the predetermined time passes (YES at the step S306), then the decision section 103 notifies the inquiry section 111 of the information which shows the fact.

In a step S307, the inquiry section 111 creates the inquiry message data which shows that there is the divided message data which has not yet been received among the pieces of divided message data which makes up the undivided message data. Then, it transmits it to the mail server 40 via the transmission section 108 (in the step S307). In this case, if the divided message data which relates to the inquiry is recorded, then the mail server 40 transmits the divided recorded message data to the message-data transmitting and receiving unit. On the other hand, if the divided message data which relates to the inquiry is not recorded, then it notifies the message-data transmitting and receiving unit that there is not the divided message data.

In a step S308, if not all the divided message data which makes up the undivided message data could be received as a result of the inquiry (YES at the step S308), then the decision section 103 specifies which divided message data has not yet been received. Then, it notifies the message-data creation section 104 of the specified information. On the other hand, in the step S308, if all the divided message data which makes up the undivided message data could be received as a result of the inquiry (NO at the step S308), then the decision section 103 moves the processing forward to the step S108 shown in Fig. 4.

In a step S309, the message-data creation section 104, which has been notified of the information which specifies which divided message data has not yet been received, creates notification message data whose text data is the information whose notice has been given, and transmits it to the transmission source of the undivided message data via the transmission section 108.

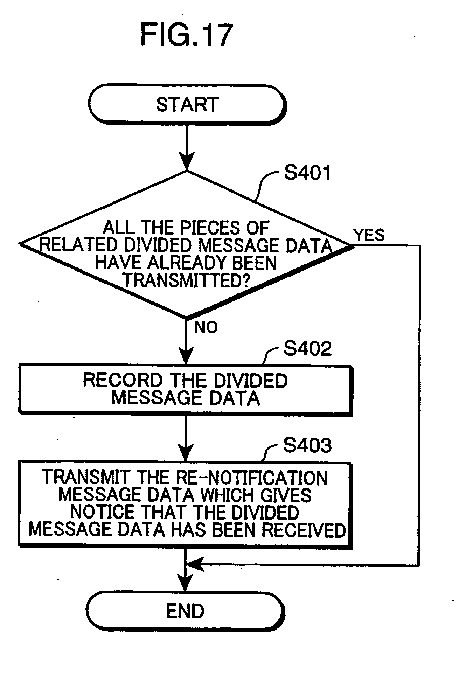

Next, the processing will be described in the case of receiving the divided message data which shows that the divided message data has not yet been received, after the notification message data has been transmitted. Fig. 17 is a flow chart showing that processing. The flow chart shown in Fig. 17 may also be applied to the message-data transmitting and receiving unit according to the second embodiment. Herein, before the processing of this flow chart starts, it is decided by the decision section 103 that the received message data is the divided message data.

First, in a step S401, if the receiving section 101 receives message data, the decision section 103 decides whether or not all the related divided message data has already been transmitted. Then, if the decision section 103 decides that all the related divided message data has already been transmitted (YES at the step S401), then the processing is completed. On the other hand, in the step S401, if the decision section 103 decides that not all the related divided message data has been collected (NO at the step S401), then the received divided message data is recorded in the divided message-data recording section 109 (in a step S402). Then, the decision section 103 refers to the division state identifier of the received divided message data, and thereby, specifies the order of the received divided message data in the undivided message data. Then, it notifies the message-data creation section 104 of it.

In a step S403, based on the information whose notice has been given from the decision section 103, the message-data creation section 104 creates re-notification message data whose text data is the information which shows which divided message data has been received, and transmits it to the transmission source of the divided message data via the transmission section 108.

Therefore, the transmission source of the divided message data can decide that among the pieces of divided message data which have once been judged not to be transmitted, there is no need to re-transmit the divided message data shown by the reception-confirmation message data.

As described above, in the message-data transmitting and receiving unit according to the third embodiment, the transmission source can reduce the number of times at which the divided message data which has once been transmitted is re-transmitted, thereby lowering the packet rates which are charged the transmission source. In addition, inquiries are made of the mail server 40, thus making the response to those inquiries quicker than in the case where the inquiries are made of the transmission source.

### (Fourth Embodiment)

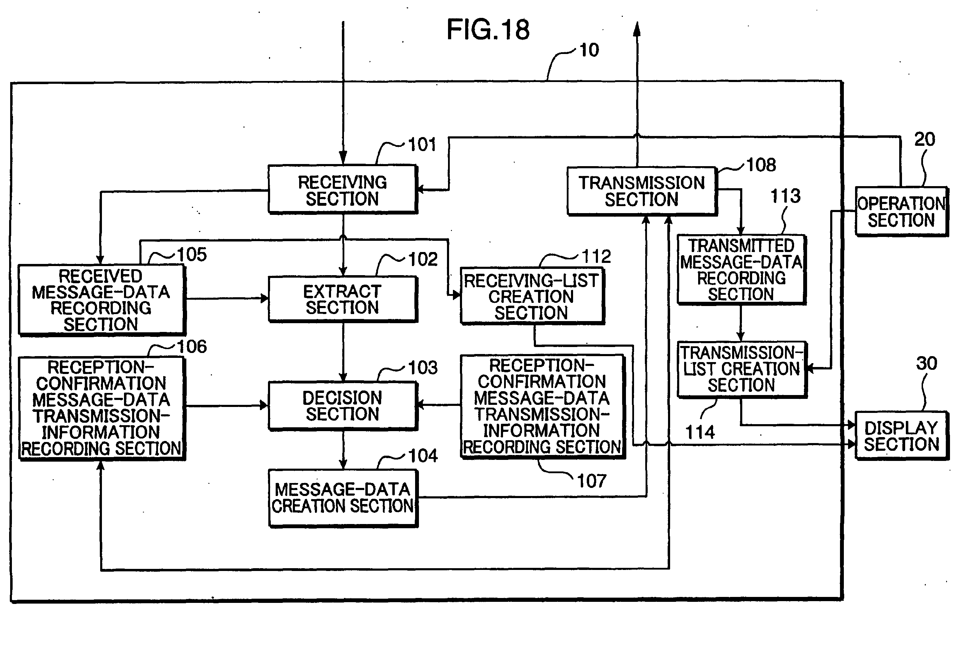

Fig. 18 is a block diagram, showing the message-data transmitting and receiving unit according to a fourth embodiment of the present invention. In the message-data transmitting and receiving unit according to the fourth embodiment, a receiving-list creation section 112, a transmitted message-data recording section 113 and a transmission-list creation section 114 are provided in addition to the sections of the message-data transmitting and receiving unit according to the first embodiment shown in Fig. 1.

When the operation section 20 accepts an operation command to display a receiving list from a user, the receiving-list creation section 112 creates a receiving list of the received message data, based on the transmission information of each piece of message data which is recorded in the received message-data recording section 105. Then, it is displayed on the display section 30.

The transmitted message-data recording section 113 records all the message data transmitted by the transmission section 108.

When the operation section 20 accepts the operation command to display the receiving list from the user, the transmission-list creation section 114 refers to the transmitted message-data recording section 113. Thereby, it creates a transmission list of the transmitted message data.

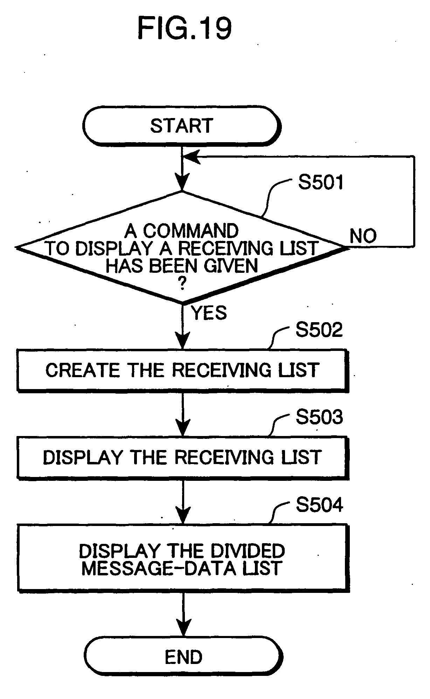

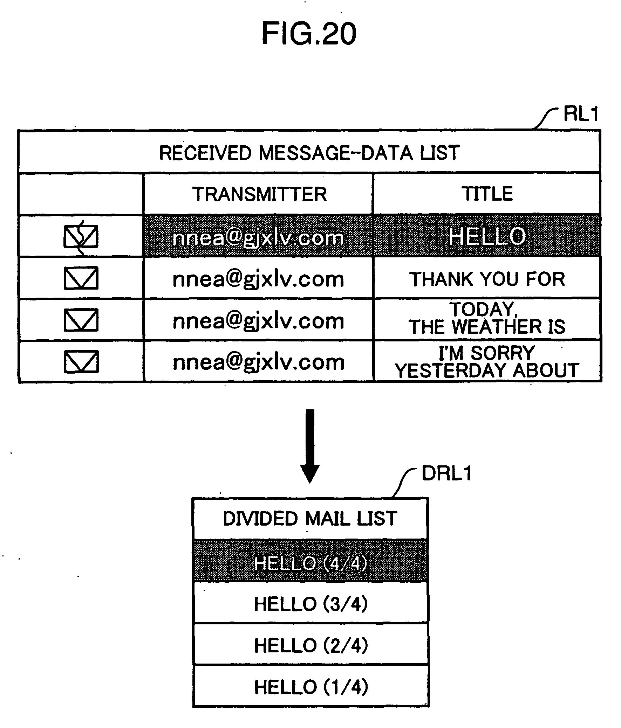

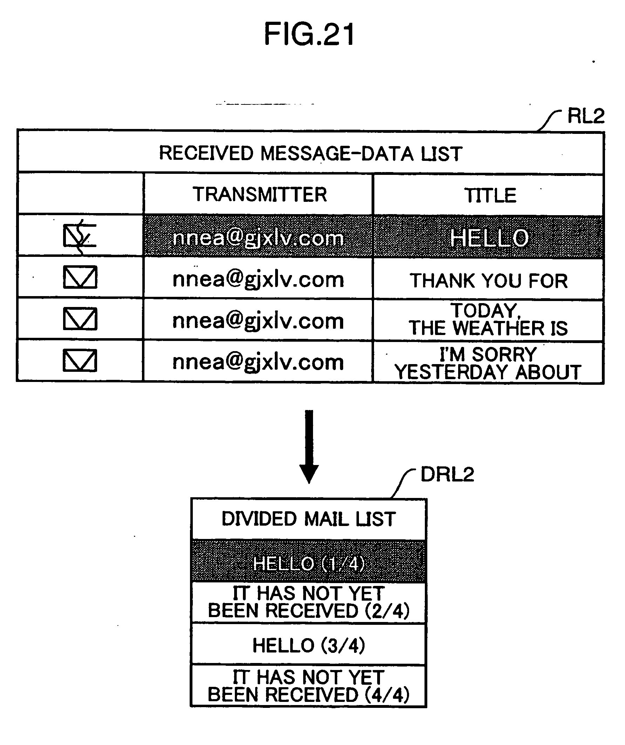

Next, an operation at the time when the message-data transmitting and receiving unit displays the receiving list will be described, using a flow chart shown in Fig. 19. In a step S501, if an operation command to display a receiving list is executed from a user via the operation section 20 (YES at the step S501), then the receiving-list creation section 112 creates a receiving list, based on the transmission information of each piece of message data which is recorded in the received message-data recording section 105 (in a step S502). Then, the created receiving list is displayed on the display section 30 (in a step S503). On the other hand, if the operation command to display the receiving list is not executed (NO at the step S501), then the processing returns to the step S501. Fig. 20 is a representation, showing an example of the receiving list which is displayed on the display section 30 if all the divided message data which makes up undivided message data has been already received. Fig. 21 is a representation, showing an example of the receiving list which is displayed on the display section 30 if a part of the divided message data which makes up the undivided message data has not been received.

In a receiving list RL1, one piece of message data is displayed on each line. On the first row, an icon display column is provided which displays an icon which shows the receiving situation of the message data. On the second row, a "transmitter" column is provided which shows the transmitter of the message data. On the third row, a column is provided which displays the title of the message data.

In this case, the receiving-list creation section 112 refers to the division identifier of each piece of message data from the received message-data recording section 105. Then, it decides whether or not there is the divided message data. Then, if there is the divided message data, the receiving-list creation section 112 specifies the related divided message data. Next, it displays these pieces of divided message data in the display column of one piece of message data. Then, in the icon display column of the message data which is united to form one piece, the receiving-list creation section 112 displays an icon of an envelope which has a wavy line in the up-and-down directions (see the first line of the receiving list RL1). Herein, the wavy line represents the message data which relates to the division.

Thus, the pieces of message data which relate to the division are united and displayed in the display column for one piece of message data, so that more other pieces of message data can be included in the receiving list. Especially, this receiving list is useful in a device with a small-sized display portion, such as a mobile phone.

If the column of the undivided message data is selected in the receiving list RL1, then a divided message list DRL1 is displayed which displays together the title of each piece of divided message data (in a step S504). In the divided message list DRL1, the pieces of divided message are displayed in numerical order from the lowermost line to the uppermost line. However, the order is not limited to this, and thus, the pieces of divided message may also be displayed in numerical order from the uppermost line to the lowermost line.

On the other hand, if not all the related divided message data has been received, then an icon, which shows the message data which relates to the division and that not all the related message data has yet been received, is displayed in the icon display column of the message data which is united to form one piece. In this case, as shown in the icon display column on the first line of a receiving list RL2 shown in Fig. 21, the icon is displayed which has a broken line in the up-and-down directions and has an envelope whose right-hand half is broken.

If the column of the divided message list on the first line is selected in the receiving list RL2, then a divided message list DRL2 is displayed. In this case, the second and fourth pieces of divided message data of the four pieces of divided message data have not yet been received. Therefore, Not Received (2/4) and Not Received (4/4) are each displayed on the second and fourth lines of the divided message list DRL2.

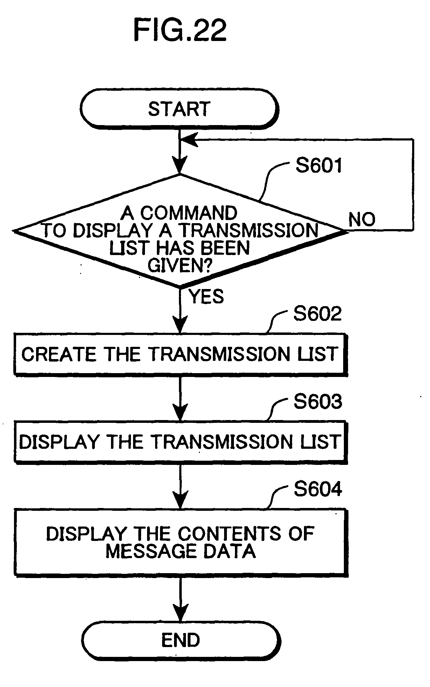

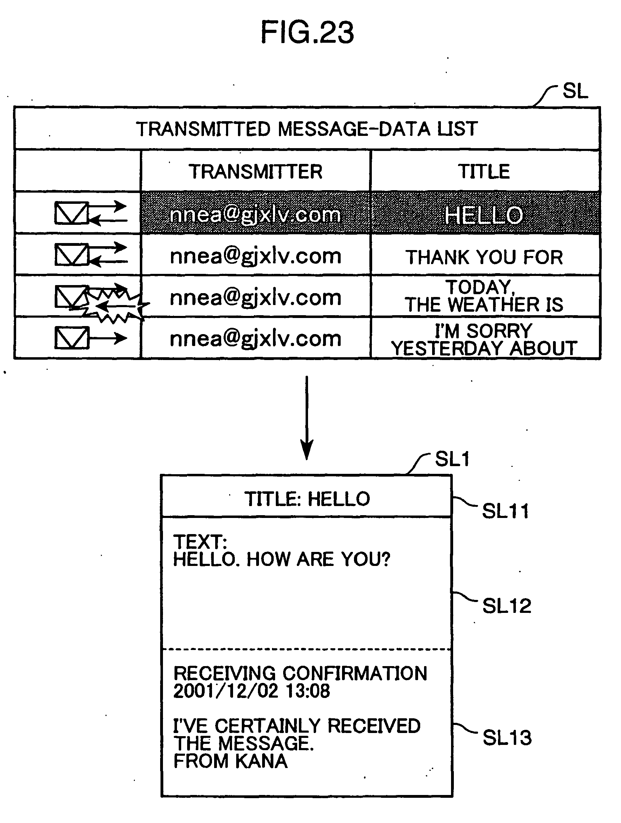

Next, an operation at the time when the message-data transmitting and receiving unit displays a transmission list will be described. Fig. 22 is a flow chart, showing the operation at the time when the message-data transmitting and receiving unit displays the transmission list. Fig. 23 is a representation, showing an example of the transmission list created by a transmission-list creating section 114.

First, if a command is accepted to display the transmission list from a user (YES at the step S601), then the transmission-list creating section 114 creates the transmission list, based on the transmission information of each piece of message data which is recorded in the transmitted message-data recording section 113 (in a step S602). Then, it is displayed on the display section 30. On the other hand, if the command is not accepted to display the transmission list (NO at the step S601), then the processing returns to the step S601.

In this case, such a transmission list SL as shown in Fig. 23 is created. In this transmission list SL, one piece of message data is displayed on each line. On the first row, an icon display column is provided which displays an icon which shows whether or not the reception-confirmation message data has already been received in response to each piece of transmitted message data. On the second row, a "transmission destination" column is provided which shows the mail address of the transmission destination. On the third row, a "title" column is provided which displays the title.

In this case, the transmission-list creating section 114 decides whether or not the reception-confirmation message data has been received, based on whether or not the transmission information, which is made up of the same phrase as the title of the transmission information which is recorded in the transmitted message-data recording section 113 and has the title that includes the phrase of "reception confirmation" following that phrase, is recorded in the received message-data recording section 105. Then, based on the decision result, different kinds of icons are displayed in the icon display columns.

In the icon display column for the transmitted message data whose reception-confirmation message data has been received, as shown on the first line, an icon is displayed which has an envelope together with a rightward arrow and a leftward arrow that has the same color (e.g., black) as the rightward arrow, which are displayed parallel in the up-and-down directions. At this time, in the icon display column for the transmitted message data whose reception-confirmation message data has been received, and a predetermined number of transmitted messages (e.g., one message) from the present to the past, as shown on the third line, an icon is displayed whose leftward arrow flashes on and off.

On the other hand, in the icon display column for the transmitted message data whose reception-confirmation message data has not yet been received, as shown on the second line, an icon is displayed which has an envelope together with a rightward arrow and a leftward arrow that has a different color (e.g., red) from the rightward arrow, which are displayed parallel in the up-and-down directions. Herein, in the icon display column for the transmitted message data whose reception-confirmation message is not requested, as shown on the fourth line, an icon is displayed which has an envelope together with only a rightward arrow.

In a step S604, if a piece of transmitted message data is selected from the transmission list SL, then the transmission-list creating section 114 displays a text display picture SL1 which shows the text data of the selected transmitted message data. The text display picture SL1 includes: a "title" column SL11; a text display column SL12 which is displayed below the "title" column SL11 and displays the text data of the transmitted message data; and a text display column SL13 which is displayed below the text display column SL12 and displays the text data of the reception-confirmation message data. On the first line of the text display column SL13, the time when the reception-confirmation message data was transmitted is displayed. This enables the user to recognize with a single glance when the reception-confirmation message data was transmitted. This transmission time is obtained by referring to the transmission-time information of the reception-confirmation message data. Herein, how the text display picture SL1 is displayed is not limited to the implementation in Fig. 23. For example, the text display column SL12 may also be displayed below the text display column SL13.

Herein, if the column of the transmitted message data shown on the second line of the transmission list SL, in which the reception-confirmation message data has not yet been received, is selected, and if the column shown on the fourth line, in which a request to transmit the reception-confirmation message data is not made, is selected, then the text display picture SL1 only includes the title display column SL11 and the text display column SL12.

As described above, in the message-data transmitting and receiving unit according to the fourth embodiment, the receiving list does not display one piece of divided message data is displayed on each display column, but displays one piece of undivided message data is displayed on each display column. This allows more pieces of different message data to be displayed. Especially, this receiving list is useful in a device with a small-sized display portion, such as a mobile phone.

Furthermore, in the receiving list, the icon which shows undivided message data is displayed in the icon display column of undivided message data. This enables the user to recognize promptly which message data is the undivided message data.

Moreover, if undivided message data is selected, then the divided message list is displayed which displays together the pieces of divided message data which makes up the undivided message data. This enables the user to find out easily the pieces of divided message data which are related to a specific piece of divided message data.

In addition, in the transmission list, the message data whose reception-confirmation message data has already been received, and the message data whose reception-confirmation message data has not yet been received, are displayed with different icons. This enables the user to decide easily whether the reception-confirmation message data has already been received, or has not yet been received.

Herein, in the message-data transmitting and receiving units according to the second embodiment and the third embodiment, the following aspects may also be used.
(1) In the decision section 103, the predetermined time of the time management section 110 may also be set to 0.
(2) In the decision section 103, the predetermined time of the time management section 110 may also be suitably varied, as described in the following (2-1) and (2-2), according to the number m of messages into which undivided message data is divided.
   (2-1) In the decision section 103, the larger the number m becomes, the longer predetermined time is set.
   (2-2) In the decision section 103, the larger the number m becomes, the shorter predetermined time is set.
(3) In the decision section 103, a defined value i may also be set. In that case, as described in the following (3-1) and (3-2), the predetermined time of the time management section 110 is set to different values, according to whether the division number m is larger, or smaller, than the defined value i.
   (3-1) In the decision section 103, the predetermined time of the time management section 110 is set so that T1 <T2. Herein, a predetermined time T1 is a time in the case of the division number m <(≦) the defined value i, and a predetermined time T2 is a time in the case of the division number m ≧ (>) the defined value i.
   (3-2) In the decision section 103, the predetermined time of the time management section 110 is set so that T1 >T2. Herein, a predetermined time T1 is a time in the case of the division number m <(≦) the defined value i, and a predetermined time T2 is a time in the case of the division number m ≧ (>) the defined value i.

   In the case of the above described (2-1) and (3-1), the fact that the smaller the division number of undivided message data is, in general, the more important one divided message becomes, can be dealt with.
   In the case of the above described (2-2) and (3-2), if the divided message data whose division number m is small can be relatively received, the pieces of divided message data which have not yet been received can be easily followed up. This enables the user to shorten the predetermined time, and thereby follow up earlier the pieces of divided message data which have not yet been received.
   In addition, as the situation where there are the pieces of divided message data which have not yet been received, network trouble, network traffic or the like can be considered in communication surroundings. In that case, the pieces of divided message data after the division number m = the defined value 1 may be omitted. However, the methods of the above described (2) and (3) are useful for such a situation.
(4) According to an operation command which is inputted by a user via the operation section 20, the decision section 103 may also set the predetermined time of the time management section 110 to any value. Or, the setting may also be conducted with respect to which pattern of the above described (2-1), (2-2), (3-1) and (3-2) should be used. This enables a service operator or a user to set the predetermined time according to their priorities.

### (Summary of the Embodiments)

The various embodiments of the present invention described hereinbefore can be summarized as follows.

The message-data transmitting and receiving unit according to the present invention, which transmits and receives message data, comprising: an extracting means for extracting, from the received message data, transmission information which includes first information for identifying the received message data; a reception-confirmation message-data transmission-information recording means for recording transmission information included in transmitted reception-confirmation message data; a deciding means for comparing the first information of the transmission information extracted by the extracting means and first information of the transmission information recorded by the reception-confirmation message-data transmission-information recording means, and deciding whether or not the reception-confirmation message data which corresponds to the received message data has been transmitted; a reception-confirmation message-data creating means for creating the reception-confirmation message data if the deciding means decides that the reception-confirmation message data has not yet been transmitted; and a transmitting means for transmitting the created reception-confirmation message data to a transmission source of the received message data.

In the message-data transmitting and receiving unit according to the present invention, transmission information included in the transmitted reception-confirmation message data is recorded by the reception-confirmation message-data transmission-informationrecordingmeans. Then, transmission information included in the receivedmessage data is extracted. Next, the first information included in the extracted transmission information, and the first information of the transmission information recorded in the reception-confirmation message-data transmission-information recording means, are compared. Then, based on the first information, it is decided whether or not the reception-confirmation message data has already been transmitted in response to the received message data. If it has not yet been transmitted, the reception-confirmation message data is created and transmitted. Therefore, the reception-confirmation message data can be prevented from being re-transmitted in response to the message data whose reception-confirmation message data has already been transmitted, thus allowing communication resources to be more efficiently used.

In the above described message-data transmitting and receiving unit, preferably, the transmission information further includes a division identifier which shows whether the received message data is divided message data; the deciding means decides whether or not the received message data is the divided message data, based on the division identifier of the transmission information extracted by the extracting means; and if the deciding means decides that the received message data is the divided message data, the reception-confirmation message-data creating means creates one piece of reception-confirmation message data in response to one piece of undivided message data which is made up of the divided message data.

According to this configuration, one piece of reception-confirmation message data is created in response to one piece of undivided message data. Therefore, one piece of reception-confirmation message data can be prevented from being transmitted for every piece of divided message data, thus allowing communication resources to be more efficiently used.

In the above described message-data transmitting and receiving unit, preferably, the deciding means decides whether or not all the divided message data which makes up the undivided message data is received; if the deciding means decides that not all the divided message data which makes up the undivided message data is received, the reception-confirmation message-data creating means creates notification message data which notifies the transmission source of the undivided message data that there is the divided message data which has not yet been received; and the transmitting means transmits the notification message data to the transmission source. According to this configuration, the notification message data which shows that there is the divided message data which has not yet been received is transmitted to the transmission source of the undivided message data. This enables the transmission source to recognize that a part of the divided message data has not yet been received.

In the above described message-data transmitting and receiving unit, preferably, the received message data is transmitted via a mail server from a message-data transmitting and receiving unit on the transmission side; the deciding means decides whether or not all the divided message data which makes up the undivided message data is received; and the message-data transmitting and receiving unit further comprises an inquiring means which, if the deciding means decides that not all the divided message data which makes up the undivided message data is received, inquires of the mail server whether or not there is the divided message data which has not been received, and if there is the divided message data which has not yet been received as a result of the inquiry, receives the divided message data which has not yet been received from the mail server.

According to this configuration, if not all the pieces of divided message data which are related to the piece of divided message data have been received after the divided message data is received and before the predetermined time passes, then an inquiry is made of the mail server. If there are the divided message data which have not yet been received in the mail server, they are transmitted from the mail server. Therefore, the transmission source can reduce the number of times at which the divided message data which has once been transmitted is re-transmitted, thereby lowering the packet rates which are charged the transmission source. In addition, inquiries are made not of the transmission source but directly of the mail server, thus making the response to those inquiries quicker.

In the above described message-data transmitting and receiving unit, preferably, if not all the divided message data which makes up the undivided message data has been yet received even after the inquiry is made by the inquiring means, the reception-confirmation message-data creating means creates notification message data which notifies the transmission source of the undivided message data that there is the divided message data which has not yet been received; and the transmitting means transmits the notification message data.

According to this configuration, even if the divided message data which has not yet been received is inquired of the mail server, not all the related divided message data may be received. In that case, the notification message data is transmitted which gives notice that there is the divided message data which has not yet been received in the transmission source. This enables the transmission source to recognize more precisely that there is the divided message data which has not yet been received.

In the above described message-data transmitting and receiving unit, preferably, the transmission information includes a division state identifier which shows the order of the divided message data; and the reception-confirmation message-data creating means specifies which divided message data has not yet been received using the division state identifier, and creates notification message data whose text data is the specification result.

According to this configuration, the transmission source can recognize which divided message data has not yet been received. This enables the transmission source to re-transmit only the divided message data which has not yet been received, without re-transmitting all the pieces of divided message data which makes up the undivided message data. This prevents unnecessary message data from being transmitted, thereby lowering the packet rates which are charged the transmission source.

In the above described message-data transmitting and receiving unit, preferably, after the transmitting means transmits the notification message data, if the dividedmessage data which is shown not to have been received by the notification message data is received, the reception-confirmation message-data creating means creates re-notification message data which gives notice again that the divided message data has been received.

According to this configuration, after the transmission source of the divided message data has transmitted the notification message data, if the divided message data which is shown not to have been received by the notification message data is received, the re-notification message data which gives notice again that the divided message data has been received is transmitted to the transmission source. This allows the transmission source to save the trouble tore-notify the divided message data.

In the above described message-data transmitting and receiving unit, preferably, the transmission information includes a reception-confirmation identifier which shows whether or not the received message data is the reception-confirmation message data; the deciding means decides whether or not the received message data is the reception-confirmation message data, based on the reception-confirmation identifier included in the transmission information extracted by the extracting means; and if the deciding means decides that the received message data is the reception-confirmation message data, the reception-confirmation message-data creating means does not create the reception-confirmation message data which corresponds to the received message data.

According to this configuration, if the receivedmessage data is the reception-confirmation message data from the other side, the reception-confirmation message data is not created. Therefore, the reception-confirmation message data can be prevented from being transmitted in response to the reception-confirmation message data.

The above described message-data transmitting and receiving unit, preferably, further comprising a message-data creation-information recording means for relating a transmission destination of the reception-confirmation message data created by the reception-confirmation message-data creating means to text data of the reception-confirmation message data, and recording the transmission destination and the text data, wherein: the deciding means decides whether or not the text data which corresponds to the transmission destination of the reception-confirmation message data to be created is recorded in the message-data creation-information recording means; and if the deciding means decides that the text data which corresponds to the transmission destination of the reception-confirmation message data to be created is recorded in the message-data creation-information recording means, the reception-confirmation message-data creating means sets the corresponding text data as the text data of the reception-confirmation message data to be created.

According to this configuration, to the other side to which the reception-confirmation message data has ever been transmitted, the text data used in the past is automatically set as the text data of the reception-confirmation message data. Then, it is transmitted to the other side. This saves the trouble to create again the reception-confirmation message data.

In the above described message-data transmitting and receiving unit, preferably, the message-data creation-information recording means further records common-text setting information which shows whether or not all the reception-confirmation message data is set to have the text data in common, and common text-data which is created beforehand as the text data of the reception-confirmation message data which is set in common; and if the common-text setting information shows that all the reception-confirmation message data is set to have the text data in common, the creating means sets the common text-data as the text data of the reception-confirmation message data to be created.

According to this configuration, if to the common-text setting information, the information which shows that all the pieces of reception-confirmation message data is made in common is set, the common text-data which is created beforehand is automatically set as the text data of the reception-confirmation message data. Then, it is transmitted to the other side. This saves the trouble to create text data every time the reception-confirmation message data is transmitted.

The above described message-data transmitting and receiving unit, preferably, further comprising a receiving-list displaying means for displaying a receiving list of the received message data, wherein the receiving-list displaying means does not display each piece of divided message data in one display column of the receiving list, but displays one piece of undivided message data which is made up of the divided message data in one display column of the receiving list.

According to this configuration, on the receiving list, one piece of divided message data is not displayed in one display column. Instead, one piece of undivided message data is displayed in one display column. This allows more pieces of different message data to be displayed. Especially, the receiving list according to the present invention is useful in a device with a small-sized display portion, such as a mobile phone.

In the above described message-data transmitting and receiving unit, preferably, the receiving list includes an icon display column which displays an icon which shows information on each piece of message data; and when displaying the undivided message data on the receiving list, the receiving-list displaying means displays in the icon display column an icon which shows that it is the undivided message data.

According to this configuration, in the display column of the undivided message data, an icon which shows that it is the undivided message data is displayed. This enables the user to recognize promptly on the receiving list which message data is the undivided message data.

The above described message-data transmitting and receiving unit, preferably, further comprising an accepting means for accepting a selection command from a user which corresponds to each piece of message data displayed on the receiving list, wherein if the accepting means accepts the selection command from the user, the receiving-list displaying means displays a division mail list which displays together each piece of the divided message data which makes up the undivided message data.

According to this configuration, if the undivided message data is selected on the receiving list, the division mail list is displayed which displays together the pieces of the divided message data which makes up the undivided message data. This enables the user to find out easily the pieces of divided message data which are related to a specific piece of divided message data.

The above described message-data transmitting and receiving unit, preferably, further displaying a transmission-list displaying means for creating a transmission list of the transmitted message data, wherein: the transmission list includes an icon display column which displays an icon which shows information on each piece of message data; and the transmission-list displaying means displays the icon in a first state, with respect to the transmitted message data whose reception-confirmation message has been received, and displays the icon in a second state different from the first state, with respect to the message data whose reception-confirmation message has not been received.

According to this configuration, the user can recognize promptly the message data whose reception-confirmation message has been received, and the message data whose reception-confirmation message data has not been received.

In the above described message-data transmitting and receiving unit, preferably, the transmission-list displaying means displays the icon in a third state different from the first and second states, with respect to a predetermined number of pieces of the reception-confirmation message data which were received before.

According to this configuration, the user can recognize promptly the reception-confirmation message which has recently been received.

In the message-data transmitting and receiving unit according to the present invention, the reception-confirmation message data is not re-transmitted in response to the message data whose reception-confirmation message data has once been received. In addition, with respect to the divided message data, the reception-confirmation message data is not transmitted for every piece of divided message data. Moreover, the reception-confirmation message data is not transmitted in response to the reception-confirmation message data. This allows communication resources to be more efficiently used.

A message-data transmitting and receiving unit, includes: an extract section which extracts transmission information from message data that has been received; a decision section which decides whether or not the received message data has already been transmitted, based on the extracted transmission information; a message-data creation section which creates message data, based on the decision result by the decision section; and a transmission section which transmits the created message data.

## Claims

1. A message-data transmitting and receiving unit which transmits and receives message data, comprising:
an extracting means (102) for extracting, from the received message data, transmission information which includes first information for identifying the received message data; and
transmitting means (108) for transmitting reception-confirmation message data to a transmission source of the received message data,
**characterized by:**
a reception-confirmation message-data transmission-information recording means (106) for recording transmission information included in transmitted reception-confirmation message data;
a deciding means (103) for comparing the first information of the transmission information extracted by the extracting means (102) and the transmission information recorded by the reception-confirmation message-data transmission-information recording means (106), and deciding whether or not the reception-confirmation message data that corresponds to the received message data has been transmitted; and
a reception-confirmation message-data creating means (104) for creating the reception-confirmation message data if the deciding means (103) decides that the reception-confirmation message data has not yet been transmitted,
wherein the transmitting means is arranged to transmit the created reception-confirmation message data to the transmission source of the received message data.

2. The message-data transmitting and receiving unit according to claim 1, wherein:
the transmission information further includes a division identifier which shows whether the received message data is divided message data created by dividing undivided message data into several pieces of data;
the deciding means (103) decides whether or not the received message data is the divided message data, based on the division identifier of the transmission information extracted by the extracting means; and
if the deciding means decides that the received message data is divided message data, the reception-confirmation message-data creating means creates one piece of reception-confirmation message data in response to a last piece of the divided message data belonging to the undivided message data.

3. The message-data transmitting and receiving unit according to claim 2, wherein:
the deciding means (103) decides whether or not all the divided message data which makes up the undivided message data is received;
if the deciding means decides that not all the divided message data which makes up the undivided message data is received, the reception-confirmation message-data creating means (104) creates notification message data which notifies the transmission source of the undivided message data that there is the divided message data which has not yet been received; and
the transmitting means (108) transmits the notification message data to the transmission source.

4. The message-data transmitting and receiving unit according to claim 2, wherein:
the received message data is received via a mail server from a message-data transmitting and receiving unit on the transmission side;
the deciding means decides whether or not all the divided message data which makes up the undivided message data is received; and
the message-data transmitting and receiving unit further comprises an inquiring means (111) which, if the deciding means decides that not all the divided message data which makes up the undivided message data is received, inquires of the mail server whether or not there is the divided message data which has not been received, and, as a result of the inquiry, if there is the divided message data which has not yet been received, receives the divided message data which has not yet been received.

5. The message-data transmitting and receiving unit according to claim 4, wherein:
if not all the divided message data which makes up the undivided message data has been yet received even after the inquiry is made by the inquiring means, the reception-confirmation message-data creating means creates notification message data which notifies the transmission source of the undivided message data that there is the divided message data which has not yet been received; and
the transmitting means transmits the notification message data.

6. The message-data transmitting and receiving unit according to claim 3, wherein:
the transmission information includes a division state identifier which shows the order of the divided message data; and
the reception-confirmation message-data creating means specifies which divided message data has not yet been received using the division state identifier, and creates notification message data whose text data is the specification result.

7. The message-data transmitting and receiving unit according to claim 6, wherein after the transmitting means transmits the notification message data, if the divided message data which is specified not to have been received by the notification message data is received, the reception-confirmation message-data creating means creates re-notification message data which gives notice again that the divided message data has been received.

8. The message-data transmitting and receiving unit according to claim 1, wherein:
the transmission information includes a reception-confirmation identifier which shows whether or not the received message data is the reception-confirmation message data;
the deciding means decides whether or not the received message data is the reception-confirmation message data, based on the reception-confirmation identifier included in the transmission information extracted by the extracting means; and
if the deciding means decides that the received message data is the reception-confirmation message data, the reception-confirmation message-data creating means does not create the reception-confirmation message data which corresponds to the received message data.

9. The message-data transmitting and receiving unit according to claim 1, further comprising a message-data creation-information recording means (107) for relating a transmission destination of the reception-confirmation message data created by the reception-confirmation message-data creating means to text data of the reception-confirmation message data, and recording the transmission destination and the text data, wherein:
the deciding means decides whether or not the text data which corresponds to the transmission destination of the reception-confirmation message data to be created is recorded in the message-data creation-information recording means; and
if the deciding means decides that the text data which corresponds to the transmission destination of the reception-confirmation message data to be created is recorded in the message-data creation-information recording means, the reception-confirmation message-data creating means sets the corresponding text data as the text data of the reception-confirmation message data to be created.

10. The message-data transmitting and receiving unit according to claim 9, wherein:
the message-data creation-information recording means further records common-text setting information which shows whether or not all the reception-confirmation message data is set to have the text data in common, and common text-data which is created beforehand as the text data of the reception-confirmation message data which is set in common; and
if the common-text setting information shows that all the reception-confirmation message data is set to have the text data in common, the creating means sets the common text-data as the text data of the reception-confirmation message data to be created.

11. The message-data transmitting and receiving unit according to claim 2, further comprising a receiving-list displaying means (30) for displaying a receiving list of the received message data,
wherein the receiving-list displaying means does not display each piece of divided message data in one display column of the receiving list, but displays one piece of undivided message data which is made up of the divided message data in one display column of the receiving list.

12. The message-data transmitting and receiving unit according to claim 11, wherein:
the receiving list includes an icon display column which displays an icon which shows information on each piece of message data; and
when displaying the undivided message data on the receiving list, the receiving-list displaying means displays in the icon display column an icon which shows that it is the undivided message data.

13. The message-data transmitting and receiving unit according to claim 12, further comprising an accepting means for accepting a selection command from a user which corresponds to each piece of message data displayed on the receiving list,
wherein if the accepting means accepts the selection command from the user, the receiving-list displaying means displays a division mail list which displays together each piece of the divided message data which makes up the undivided message data.

14. The message-data transmitting and receiving unit according to claim 1, further comprising a transmission-list displaying means (30) for displaying a transmission list of the transmitted message data, wherein:
the transmission list includes an icon display column which displays an icon which shows information on each piece of message data; and
the transmission-list displaying means displays the icon in a first state, with respect to the transmitted message data whose reception-confirmation message has been received, and displays the icon in a second state different from the first state, with respect to the message data whose reception-confirmation message has not been received.

15. The message-data transmitting and receiving unit according to claim 14, wherein the transmission-list displaying means displays the icon in a third state different from the first and second states, with respect to a predetermined number of pieces of the reception-confirmation message data which were received before.

## Patentansprüche

1. Vorrichtung zum Senden und Empfangen von Nachrichten, mit:
einem Auslesemittel (102) zum Auslesen einer Sendeinformation aus den empfangenen Nachrichten, die eine erste Information zum Identifizieren der empfangenen Nachrichten enthält; und mit
einem Sendemittel (108) zum Senden von Empfangsbestätigungsnachrichten an eine Sendequelle der empfangenen Nachrichten,
**gekennzeichnet durch**
ein Empfangsbestätigungsnachrichtensendeinformations-Aufzeichnungsmittel (106) zum Aufzeichnen von Aufzeichnungssendeinformation, die in den gesendeten Empfangsbestätigungsnachrichten enthalten ist;
ein Entscheidungsmittel (103) zum Vergleichen der ersten Information aus der vom Auslesemittel (102) ausgelesenen Sendeinformation mit der vom Empfangsbestätigungsnachrichtensendeinformations-Aufzeichnungsmittel (106) aufgezeichneten Sendeinformation und zum Entscheiden, ob die Empfangsbestätigungsnachrichten, die den empfangenen Nachrichten entsprechen, gesendet worden sind, und **durch**
ein Empfangsbestätigungsnachrichtenerstellungsmittel (104) zum Erstellen der Empfangsbestätigungsnachrichten, wenn das Entscheidungsmittel (103) entscheidet, daß die Empfangsbestätigungsnachrichten noch nicht gesendet worden sind,
wobei das Sendemittel eingerichtet ist zum Senden der erstellten Empfangsbestätigungsnachrichten an die Sendequelle der empfangenen Nachrichten.

2. Vorrichtung zum Senden und Empfangen von Nachrichten nach Anspruch 1, wobei
die Sendeinformation des weiteren über einen Unterteilungsidentifizierer verfügt, der aufzeigt, ob die empfangenen Nachrichten durch Unterteilen nichtunterteilter Nachrichten in mehrere Datenstücke unterteilte Nachrichten sind;
das Entscheidungsmittel (103) basierend auf dem Unterteilungsidentifizierer aus der vom Auslesemittel ausgelesenen Sendeinformation entscheidet, ob die empfangenen Nachrichten die unterteilten Nachrichten sind; und wobei
im Falle, daß das Entscheidungsmittel entscheidet, daß die empfangenen Nachrichten unterteilte Nachrichten sind, das Empfangsbestätigungsnachrichtenerstellungsmittel ein Empfangsbestätigungsnachrichtenstück als Reaktion auf ein letztes Stück der unterteilten Nachrichten erstellt, die zu den nichtunterteilten Nachrichten gehören.

3. Vorrichtung zum Senden und Empfangen von Nachrichten nach Anspruch 2, wobei
das Entscheidungsmittel (103) entscheidet, ob alle unterteilten Nachrichten, die die nichtunterteilten Nachrichten bilden, empfangen sind;
im Falle, daß das Entscheidungsmittel entscheidet, daß nicht alle unterteilten Nachrichten, die die nichtunterteilten Nachrichten bilden, empfangen sind, das Empfangsbestätigungsnachrichtenerstellungsmittel (104) eine Meldenachricht erstellt, die der Sendequelle der nichtunterteilten Nachrichten meldet, daß es noch nicht empfangene unterteilte Nachrichten gibt; und wobei
das Sendemittel (108) die Meldenachricht an die Sendequelle sendet.

4. Vorrichtung zum Senden und Empfangen von Nachrichten nach Anspruch 2, wobei
der Empfang von empfangenen Nachrichten über einen Mail-Server aus einer sendeseitigen Vorrichtung zum Senden und Empfangen von Nachrichten erfolgt;
das Entscheidungsmittel entscheidet, ob alle unterteilten Nachrichten empfangen sind, die die nichtunterteilten Nachrichten bilden; und wobei
die Vorrichtung zum Senden und Empfangen von Nachrichten des weiteren über ein Anfragemittel (111) verfügt, welches, wenn das Entscheidungsmittel entscheidet, daß nicht alle unterteilten Nachrichten, die die nichtunterteilten Nachrichten bilden, empfangen sind, eine Anfrage an den Mail-Server richtet, ob es noch nicht empfangene unterteilte Nachrichten gibt, und welches, wenn es als der Ergebnis der Anfrage noch nicht empfangene unterteilte Nachrichten gibt, die bisher noch nicht empfangenen unterteilten Nachrichten empfängt.

5. Vorrichtung zum Senden und Empfangen von Nachrichten nach Anspruch 4, bei der
im Falle, daß nicht alle unterteilten Nachrichten, die die bisher noch nicht empfangenen nichtunterteilten Nachrichten bilden, selbst nachdem das Anfragemittel die Anfrage gemacht hat, das Empfangsbestätigungsdatenerstellungsmittel Meldenachrichtendaten erstellt, die der Sendequelle nichtunterteilte Nachrichten melden, daß es noch nicht empfangene unterteilte Nachrichten gibt; und bei der
das Sendemittel die Meldenachricht sendet.

6. Vorrichtung zum Senden und Empfangen von Nachrichten nach Anspruch 3, bei der
die Sendeinformation einen Unterteilzustandsidentifizierer enthält, der die Reihenfolge der unterteilten Nachrichten aufzeigt; und bei der
das Empfangsbestätigungsnachrichtenerstellungsmittel unter Verwendung des Unterteilzustandsidentifizierers spezifiziert, welche unterteilten Nachrichten noch nicht empfangen worden sind, und Meldenachrichten erstellt, deren Textdaten das Spezifikationsergebnis bilden.

7. Vorrichtung zum Senden und Empfangen von Nachrichten nach Anspruch 6, bei der, nachdem das Sendemittel die Meldenachrichten gesendet hat, wenn die unterteilten, von den Nachrichten als nicht empfangen spezifizierte Nachrichten empfangen sind, das Empfangsbestätigungsnachrichtenerstellungsmittel neue Meldenachrichten erstellt, die erneut anzeigen, daß die unterteilten Nachrichten nicht empfangen worden sind.

8. Vorrichtung zum Senden und Empfangen von Nachrichten nach Anspruch 1, bei der
die Sendeinformation einen Empfangsbestätigungsidentifizierer enthält, der aufzeigt, ob die empfangenen Nachrichten Empfangsbestätigungsnachrichten sind;
das Entscheidungsmittel entscheidet, ob die empfangenen Nachrichten Empfangsbestätigungsnachrichten sind, und zwar auf der Grundlage des Empfangsbestätigungsidentifizierers, der in der Sendeinformation enthalten ist, die das Auslesemittel ausgelesen hat; und bei der
im Falle, daß das Entscheidungsmittel entscheidet, daß die empfangenen Nachrichten Empfangsbestätigungsnachrichten sind, das Empfangsbestätigungsnachrichtenerstellungsmittel die den empfangenen Nachrichten entsprechenden Empfangsbestätigungsnachrichten nicht erstellt.

9. Vorrichtung zum Senden und Empfangen von Nachrichten nach Anspruch 1, die des weiteren über ein Nachrichtenerstellungsinformationsaufzeichnungsmittel (107) verfügt, um ein Sendeziel der vom Empfangsbestätigungsnachrichtenerstellungsmittel erstellten Empfangsbestätigungsnachrichten mit den Textdaten der Empfangsbestätigungsnachrichten in Beziehung zu setzen und um das Sendeziel und die Textdaten aufzuzeichnen, wobei
das Entscheidungsmittel entscheidet, ob die dem Sendeziel der zu erstellenden Empfangsbestätigungsnachrichten entsprechenden Textdaten auf dem Nachrichtenerstellungsinformationsaufzeichnungsmittel aufgezeichnet sind; und wobei
wenn das Entscheidungsmittel entscheidet, daß die dem Sendeziel der zu erstellenden Empfangsbestätigungsnachrichten entsprechenden Textdaten im Nachrichtenerstellungsinformationsaufzeichnungsmittel aufgezeichnet sind, das Empfangsbestätigungsnachrichtenerstellungsmittel die zugehörigen Textdaten als Textdaten der zu erstellenden Empfangsbestätigungsnachrichten einsetzt.

10. Vorrichtung zum Senden und Empfangen von Nachrichten nach Anspruch 9, bei der
das Nachrichtenerstellungsinformationsaufzeichnungsmittel des weiteren gemeinsame Texteinstellinformationen aufzeichnet, die aufzeigen, ob alle Empfangsbestätigungsnachrichten so eingestellt sind, daß sie gemeinsame Textdaten haben, und ob zuvor als Textdaten der Empfangsbestätigungsnachrichten erstellte gemeinsame Textdaten gemeinsam eingestellt sind; und bei der
im Falle, daß die gemeinsame Texteinstellinformation aufzeigt, daß alle Empfangsbestätigungsnachrichten so eingestellt sind, die gemeinsamen Textdaten zu haben, das Erstellungsmittel die gemeinsamen Textdaten als solche der zu erstellenden Empfangsbestätigungsnachrichten einstellt.

11. Vorrichtung zum Senden und Empfangen von Nachrichten nach Anspruch 2, die des weiteren über ein Empfangslistenanzeigemittel (30) verfügt, um eine Empfangsliste der empfangenen Nachrichten darzustellen,
wobei das Empfangslistenanzeigemittel nicht jedes Stück unterteilter Nachrichten in einer Anzeigespalte der Empfangsliste anzeigt, sondern ein Stück der nichtunterteilten Nachrichten, die die unterteilten Nachrichten in einer Anzeigespalte der Empfangsliste darstellen.

12. Vorrichtung zum Senden und Empfangen von Nachrichten nach Anspruch 11, bei der
die Empfangsliste über eine Piktogrammanzeigespalte verfügt, die ein Piktogramm darstellt, das Informationen bezüglich eines jeden Nachrichtenstückes aufzeigt; und bei der
beim Anzeigen der nichtunterteilten Nachrichten auf der Empfangsliste das Empfangslistenanzeigemittel in der Piktogrammanzeigespalte ein Piktogramm darstellt, das aufzeigt, daß es sich um nichtunterteilte Nachrichten handelt.

13. Vorrichtung zum Senden und Empfangen von Nachrichten nach Anspruch 12, die des weiteren über ein Annahmemittel verfügt, um einen Auswahlbefehl von einem Anwender zu akzeptieren, der einem jeden Teil der auf der Empfangsliste angezeigten Nachrichten entspricht,
wobei im Falle, daß das Annahmemittel den Auswahlbefehl vom Anwender akzeptiert, das Empfangslistenanzeigemittel eine Unterteilmailliste darstellt, die jedes Teil der unterteilten Nachrichten gemeinsam anzeigt, die die nichtunterteilten Nachrichten bilden.

14. Vorrichtung zum Senden und Empfangen von Nachrichten nach Anspruch 1, die des weiteren über ein Sendelistenanzeigemittel (30) verfügt, um eine Sendeliste der gesendeten Nachrichten darzustellen, wobei
die Sendeliste über eine Piktogrammanzeigespalte verfügt, die ein Piktogramm darstellt, das Informationen bezüglich eines jeden Teils der Nachrichten enthält; und
das Sendelistenanzeigemittel das Piktogramm in einem ersten Zustand in Hinsicht auf die gesendeten Nachrichten darstellt, deren Empfangsbestätigungsnachrichten empfangen worden sind, und das Piktogramm in einem zweiten Zustand darstellt, der sich vom ersten Zustand in Hinsicht auf die Nachrichten unterscheidet, deren Empfangsbestätigungsnachrichten nicht empfangen worden sind.

15. Vorrichtung zum Senden und Empfangen von Nachrichten nach Anspruch 14, bei der das Sendelistenanzeigemittel das Piktogramm in einem dritten Zustand darstellt, der sich vom ersten und zweiten Zustand in Hinsicht auf eine vorbestimmte Anzahl von Teilen der zuvor empfangenen Empfangsbestätigungsnachrichten unterscheidet.

## Revendications

1. Dispositif pour la transmission et la réception de messages qui transmet et reçoit des messages, comprenant :
un moyen d'extraction (102) destiné à extraire, à partir des messages reçus, des informations de transmission qui incluent des premières informations destinées à identifier le message reçu ; et
un moyen de transmission (108) destiné à transmette un message de confirmation de réception à une source de transmission du message reçu,
**caractérisé par** :
un moyen d'enregistrement d'informations de transmission du message de confirmation de réception (106) destiné à enregistrer des informations de transmission incluses dans le message de confirmation de réception transmis ;
un moyen de décision (103) destiné à comparer les premières informations des informations de transmission extraites par le moyen d'extraction (102) aux informations de transmission enregistrées par le moyen d'enregistrement d'informations de transmission du message de confirmation de réception (106), et à décider si oui ou non le message de confirmation de réception qui correspond au message reçu a été transmis ; et
un moyen de création de message de confirmation de réception (104) destiné à créer le message de confirmation de réception si le moyen de décision (103) décide que le message de confirmation de réception n'a pas encore été transmis,
dans lequel le moyen de transmission est conçu pour transmettre le message de confirmation de réception créé à la source de transmission du message reçu.

2. Dispositif pour la transmission et la réception de messages selon la revendication 1, dans lequel :
les informations de transmission incluent en outre un identifiant de division qui indique si oui ou non le message reçu est un message divisé créé en divisant un message non divisé en plusieurs éléments de messages ;
le moyen de décision (103) décide si oui ou non le message reçu est le message divisé, sur la base de l'identifiant de division des informations de transmission extraites par le moyen d'extraction ; et
si le moyen de décision décide que le message reçu est un message divisé, le moyen de création de message de confirmation de réception crée un élément de message de confirmation de réception en réponse à un dernier élément du message divisé appartenant au message non divisé.

3. Dispositif pour la transmission et la réception de messages selon la revendication 2, dans lequel :
le moyen de décision (103) décide si oui ou non tous les messages divisés qui constituent le message non divisé sont reçus ;
si le moyen de décision décide que tous les messages divisés qui constituent le message non divisé ne sont pas reçus, le moyen de création de message de confirmation de réception (104) crée un message de notification qui notifie à la source de transmission du message non divisé qu'il y a le message divisé qui n'a pas encore été reçu ; et
le moyen de transmission (108) transmet le message de notification à la source de transmission.

4. Dispositif pour la transmission et la réception de messages selon la revendication 2, dans lequel :
le message reçu est reçu via un serveur de messagerie depuis le dispositif pour la transmission et la réception de messages sur le côté de transmission ;
le moyen de décision décide si oui ou non tous les messages divisés qui constituent le message non divisé sont reçus ; et
le dispositif pour la transmission et la réception de messages comprend en outre un moyen de demande (111) qui, si le moyen de décision décide que tous les messages divisés qui constituent le message non divisé ne sont pas reçus, demande au serveur de messagerie si oui ou non il y a le message divisé qui n'a pas été reçu, et, en résultat de la demande, s'il y a le message divisé qui n'a pas encore été reçu, reçoit le message divisé qui n'a pas encore été reçu.

5. Dispositif pour la transmission et la réception de messages selon la revendication 4, dans lequel :
si tous les messages divisés qui constituent le message non divisé n'ont pas encore été reçus même après que la demande a été faite par le moyen de demande, le moyen de création de message de confirmation de réception crée un message de notification qui notifie à la source de transmission du message non divisé qu'il y a le message divisé qui n'a pas encore été reçu ; et
le moyen de transmission transmet le message de notification.

6. Dispositif pour la transmission et la réception de messages selon la revendication 3, dans lequel :
les informations de transmission incluent un identifiant d'état de division qui indique l'ordre des messages divisés; et
le moyen de création de message de confirmation de réception spécifie quel message divisé n'a pas encore été reçu à l'aide de l'identifiant d'état de division, et crée un message de notification dont le texte est le résultat de la spécification.

7. Dispositif pour la transmission et la réception de messages selon la revendication 6, dans lequel :
après que le moyen de transmission transmet le message de notification, si le message divisé qui est spécifié comme n'ayant pas été reçu par le message de notification est reçu, le moyen de création de message de confirmation de réception crée un message de re-notification qui donne une nouvelle notification selon laquelle le message divisé a été reçu.

8. Dispositif pour la transmission et la réception de messages selon la revendication 1, dans lequel :
les informations de transmission incluent un identifiant de confirmation de réception qui indique si oui ou non le message reçu est le message de confirmation de réception ;
le moyen de décision décide si oui ou non le message reçu est le message de confirmation de réception, sur la base de l'identifiant de confirmation de réception inclus dans les informations de transmission extraites par le moyen d'extraction ; et
si le moyen de décision décide que le message reçu est le message de confirmation de réception, le moyen de création de message de confirmation de réception ne crée pas le message de confirmation de réception qui correspond au message reçu.

9. Dispositif pour la transmission et la réception de messages selon la revendication 1, comprenant en outre :
un moyen d'enregistrement d'informations de création de message (107) destiné à associer une destination de transmission du message de confirmation de réception créé par le moyen de création de message de confirmation de réception à un texte du message de confirmation de réception, et à enregistrer la destination de transmission et le texte, dans lequel
le moyen de décision décide si oui ou non le texte qui correspond à la destination de transmission du message de confirmation de réception devant être créé est enregistré dans le moyen d'enregistrement d'informations de création de message ; et
si le moyen de décision décide que le texte qui correspond à la destination de transmission du message de confirmation de réception devant être créé est enregistré dans le moyen d'enregistrement d'informations de création de message, le moyen de création de message de confirmation de réception définit le texte correspondant comme le texte du message de confirmation de réception devant être créé.

10. Dispositif pour la transmission et la réception de messages selon la revendication 9, dans lequel :
le moyen d'enregistrement d'informations de création de message enregistre en outre des informations de définition de texte commun qui indiquent si oui ou non tous les messages de confirmation de réception sont définis pour présenter le texte en commun, et le texte commun qui est créé au préalable en tant que le texte du message de confirmation de réception qui est défini en commun ; et
si les informations de définition de texte commun indiquent que tous les messages de confirmation de réception sont définis pour présenter le texte en commun, le moyen de création définit le texte commun comme le texte du message de confirmation de réception devant être créé.

11. Dispositif pour la transmission et la réception de messages selon la revendication 2, comprenant en outre :
un moyen d'affichage de liste de réception (30) destiné à afficher une liste de réception des messages reçus ;
dans lequel le moyen d'affichage de liste de réception n'affiche pas chaque élément des messages divisés dans une colonne d'affichage de la liste de réception, mais affiche un élément du message non divisé qui est constitué des messages divisés dans une colonne d'affichage de la liste de réception.

12. Dispositif pour la transmission et la réception de messages selon la revendication 11, dans lequel :
la liste de réception inclut une colonne d'affichage d'icône qui affiche une icône qui indique des informations sur chaque élément de message ; et
lors de l'affichage du message non divisé sur la liste de réception, le moyen d'affichage de liste de réception affiche dans la colonne d'affichage d'icône une icône qui indique qu'il s'agit du message non divisé ;

13. Dispositif pour la transmission et la réception de messages selon la revendication 12, comprenant en outre :
un moyen d'acception destiné à accepter une commande de sélection par un utilisateur qui correspond à chaque élément du message affiché sur la liste de réception,
dans lequel si le moyen d'acception accepte la commande de sélection par l'utilisateur, le moyen d'affichage de liste de réception affiche une liste de courrier de division qui affiche conjointement chaque élément des messages divisés qui constituent le message non divisé.

14. Dispositif pour la transmission et la réception de messages selon la revendication 1, comprenant en outre :
un moyen d'affichage de liste de transmission (30) destiné à afficher une liste de transmission du message transmis, dans lequel :
la liste de transmission inclut une colonne d'affichage d'icône qui affiche une icône qui indique des informations sur chaque élément du message; et
le moyen d'affichage de liste de transmission affiche l'icône dans un premier état, par rapport au message transmis dont le message de confirmation de réception a été reçu, et affiche l'icône dans un deuxième état différent du premier état, par rapport au message dont le message de confirmation de réception n'a pas été reçu.

15. Dispositif pour la transmission et la réception de messages selon la revendication 14, dans lequel :
le moyen d'affichage de liste de transmission affiche l'icône dans un troisième état différent du premier et du deuxième états, par rapport à un nombre prédéterminé d'éléments du message de confirmation de réception qui ont été reçus précédemment.
